(19) Europäisches Patentamt / European Patent Office / Office européen des brevets

(11) **EP 3 905 799 A1**

(12) **EUROPEAN PATENT APPLICATION**
published in accordance with Art. 153(4) EPC

(43) Date of publication:
**03.11.2021 Bulletin 2021/44**

(21) Application number: **20740997.0**

(22) Date of filing: **14.01.2020**

(51) Int Cl.:
***H04W 56/00*** (2009.01)

(86) International application number:
**PCT/CN2020/072081**

(87) International publication number:
**WO 2020/147728 (23.07.2020 Gazette 2020/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.01.2019 CN 201910049720**

(71) Applicant: **Huawei Technologies Co., Ltd.**
**Longgang District,**
**Shenzhen, Guangdong 518129, (CN)**

(72) Inventors:
• **LI, Chaojun**
**Shenzhen, Guangdong 518129 (CN)**
• **ZHENG, Juan**
**Shenzhen, Guangdong 518129 (CN)**

(74) Representative: **MERH-IP Matias Erny Reichl Hoffmann**
**Patentanwälte PartG mbB**
**Paul-Heyse-Strasse 29**
**80336 München (DE)**

(54) **COMMUNICATION METHOD AND DEVICE**

(57) A communication method and a device are provided. The communication method includes: A terminal device receives at least one SSB, where one of the at least one SSB includes at least one of a PSS, an SSS, or a PBCH, the SSB occupies (N+M+X) time units, and a time-domain structure of the SSB is as follows: in the SSB, the PSS occupies N time units, the SSS occupies M time units, and the PBCH occupies X time units, where each time unit includes Y symbols, N is an integer greater than or equal to 0, M is an integer greater than or equal to 0, X is an integer greater than or equal to 0, N, X, and M are not all 0, and Y is an integer greater than 1. The terminal device performs synchronization and/or obtains a system message based on the received at least one SSB.

FIG. 5

**Description**

**CROSS-REFERENCE TO RELATED APPLICATIONS**

This application claims priority to Chinese Patent Application No. 201910049720.X, filed with the China National Intellectual Property Administration on January 18, 2019 and entitled "COMMUNICATION METHOD AND DEVICE", which is incorporated herein by reference in its entirety.

**TECHNICAL FIELD**

This application relates to the field of communication technologies, and in particular, to a communication method and a device.

**BACKGROUND**

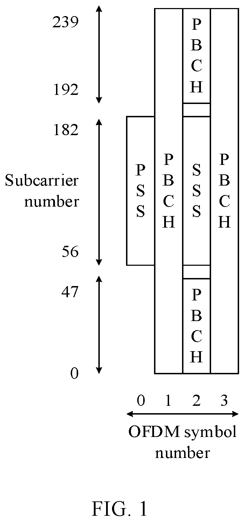

In an existing 5th generation (the 5th generation, 5G) new radio (new radio, NR) system, a terminal device may, by receiving a synchronization signal and PBCH block (synchronization signal and PBCH block, SSB), implement synchronization with a base station, obtain a system message, and the like. A primary synchronization signal (primary synchronization signal, PSS), a secondary synchronization signal (secondary synchronization signal, SSS), and a physical broadcast channel (physical broadcast channel, PBCH) together form an SSB. As shown in FIG. 1, in time domain, one SSB occupies four orthogonal frequency division multiplexing (orthogonal frequency division multiplexing, OFDM) symbols (symbol), namely, a symbol 0 to a symbol 3. In frequency domain, one SSB occupies 20 resource blocks (resource block, RB), that is, 240 subcarriers, and in the 20 RBs, the subcarriers are numbered from 0 to 239. The PSS is located on the middle 127 subcarriers in the symbol 0, and the SSS is located on the middle 127 subcarriers in the symbol 2. To protect the PSS and the SSS, different guard subcarriers are set to 0, that is, the guard subcarriers are not used to carry signals, and eight subcarriers and nine subcarriers are respectively reserved on two sides of the SSS as guard band carriers. In FIG. 1, blank areas on both sides of the SSS are guard subcarriers. The PBCH occupies all subcarriers in the symbol 1 and the symbol 3, and some subcarriers (subcarriers in remaining subcarriers other than guard subcarriers) in the remaining subcarriers other than the subcarriers occupied by the SSS in all subcarriers in the symbol 2.

A current SSB occupies 20 RBs in frequency domain, and a narrowband terminal device that supports only a bandwidth of fewer than 20 RBs cannot detect the current SSB. In deep coverage and super-distance coverage scenarios, performance of an existing SSB needs to be enhanced.

**SUMMARY**

Embodiments of this application provide a communication method and a device, to provide an SSB that can adapt to a requirement of both a broadband terminal device and a narrowband terminal device for deep coverage and super-distance coverage.

According to a first aspect, a first type of communication method is provided, and the method includes: A terminal device receives at least one SSB, where one of the at least one SSB includes at least one of a PSS, an SSS, or a PBCH, the SSB occupies (N+M+X) time units, and a time-domain structure of the SSB is as follows: in the SSB, the PSS occupies N time units, the SSS occupies M time units, and the PBCH occupies X time units, where each time unit includes Y symbols, N is an integer greater than or equal to 0, M is an integer greater than or equal to 0, X is an integer greater than or equal to 0, N, X, and M are not all 0, and Y is an integer greater than 1. The terminal device performs synchronization and/or obtains a system message based on the received at least one SSB.

The method may be performed by a first communication apparatus. The first communication apparatus may be a terminal device or a communication apparatus that can support a terminal device in implementing a function required in the method. Certainly, the first communication apparatus may alternatively be another communication apparatus, for example, a chip system. Herein, an example in which the first communication apparatus is the terminal device is used.

In this embodiment of this application, one SSB may include the PSS that occupies the N time units, the SSS that occupies the M time units, and the PBCH that occupies the X time units. This is equivalent to that these signals may occupy a plurality of symbols in time domain for sending. In addition, a range of frequency domain of the SSB is not limited in this embodiment of this application. For example, the SSB may still occupy 20 RBs in frequency domain, or may occupy fewer than 20 RBs. When the SSB occupies fewer than 20 RBs, at least one of the PSS, the SSS, or the PBCH occupies a relatively large quantity of symbols, so that deep coverage or super-distance coverage can be implemented. Therefore, the SSB provided in this embodiment of this application can not only meet a requirement of a broadband terminal device, but also meet a requirement of a narrowband terminal device.

With reference to the first aspect, in a possible implementation of the first aspect, Y=4.

In the conventional technology, one SSB occupies four symbols. Therefore, Y=4. In this case, four symbols are used as one time unit, helping implement compatibility with an existing system. For example, in a same communication system, a network device may send an SSB in the conventional technology, or may send the SSB provided in this embodiment of this application, to implement broadband and narrowband integration.

With reference to the first aspect, in a possible implementation of the first aspect, the (N+M+X) time units are discontinuous in time domain.

The discontinuous herein may mean that any two of the (N+M+X) time units are discontinuous in time domain, or may mean that at least two time units whose indexes are adjacent in the (N+M+X) time units are discontinuous in time domain. In this manner, the (N+M+X) time units are discontinuous in time domain, so that gaps (that is, discontinuous time domain positions) of the (N+M+X) time units in time domain can further be used to carry another signal, thereby facilitating compatibility with the existing system. For example, for a low-latency service such as URLLC, random transmission is required. If one SSB occupies a plurality of continuous symbols in time domain, a latency of the URLLC is affected. Therefore, the (N+M+X) time units are discontinuous in time domain, so that impact on timely transmission of the URLLC service can be reduced.

With reference to the first aspect, in a possible implementation of the first aspect, a time unit 2*i and a time unit 2*i+1 in the (N+M+X) time units are continuous in time domain, and the time unit 2*i+1 and a time unit 2*(i+1) are discontinuous in time domain, where i is any one of 0, 1, ..., and $\left\lfloor \dfrac{N+M+X}{2} \right\rfloor$.

Optionally, the (N+M+X) time units are numbered from 0. Further, numbers of the (N+M+X) time units increase in ascending order in time domain.

Optionally, the (N+M+X) time units are numbered from any number. Further, numbers of the (N+M+X) time units increase in ascending order in time domain. For ease of description, a time unit 0 may still indicate an earliest time unit in time domain in the (N+M+X) time units, a time unit 1 may indicate an earlier time unit in time domain in the (N+M+X) time units, and subsequent time units may be sequentially indicated.

In this manner, the (N+M+X) time units are partially discontinuous in time domain, so that gaps (that is, discontinuous time domain positions) of the (N+M+X) time units in time domain can further be used to carry another signal, thereby facilitating compatibility with the existing system and the existing URLLC service.

With reference to the first aspect, in a possible implementation of the first aspect, the at least one SSB is located in at least one time window, and SSBs located in different time windows have different time-domain structures.

In this embodiment of this application, one SSB is in duration. The duration may be considered as a time window, and a length of the time window is, for example, 5 ms, or may be another value. The SSBs in different time windows have different time-domain structures. For example, according to a time sequence, SSBs in some initial time windows may include an SSS, or include a relatively large quantity of SSSs. However, in some subsequent time windows, considering that the terminal device may have implemented synchronization, the terminal device more needs to receive a PBCH. Therefore, in a subsequent time window, a quantity of SSSs may be reduced, and a quantity of PBCHs may be correspondingly increased, thereby improving PBCH receiving performance of the terminal device.

With reference to the first aspect, in a possible implementation of the first aspect, X is greater than or equal to N.

Content of PSSs sent by the network device is always the same, and content of SSSs sent by the network device is also always the same. Therefore, the terminal device may increase energy by receiving the PSSs for a plurality of times, to increase a probability of correctly receiving the PSSs. This is also the same for the SSSs. However, content of PBCHs sent by the network device at different moments may be different. For example, a PBCH sent by the network device in a period of time carries first content, and content carried in a PBCH sent in a next period of time may become second content. Therefore, the terminal device cannot increase receiving accuracy by receiving the PBCHs for a plurality of times in a long time. Therefore, the network device may send the PBCHs for a plurality of times in a short time, to improve PBCH coverage, and increase the receiving accuracy of the terminal device. From this perspective, X may be greater than N, or may be equal to N.

With reference to the first aspect, in a possible implementation of the first aspect, N is greater than or equal to M.

When the terminal device performs initial access, blind detection is completely performed when the terminal device detects the PSS. The terminal device does not learn of a position of the PSS, and detection is completely implemented through blind detection. To accelerate a speed of the blind detection on the PSS, the network device may configure PSSs in a more dense way in time domain to accelerate the speed of the blind detection on the PSS by the terminal device. However, the terminal device has received the PSS when detecting the SSS. Compared with the PSS, it is relatively easy for the terminal device to detect the SSS. Therefore, a quantity of times that the network device sends the SSS may be less than a quantity of times that the network device sends the PSS. Therefore, N may be greater than M. Certainly, if coverage of the synchronization signal is further improved, N may also be equal to M.

With reference to the first aspect, in a possible implementation of the first aspect,

before a terminal device receives at least one SSB, the method further includes: The terminal device receives first signaling, where the first signaling is used to indicate an SSB time-domain structure; and

that a terminal device receives at least one SSB includes: The terminal device receives the at least one SSB based on the SSB time-domain structure.

For example, if the SSB time-domain structure is configured by the network device, the network device may send the first signaling to the terminal device, and the terminal device may correctly receive the at least one SSB after learning of the SSB time-domain structure. Alternatively, the SSB time-domain structure may be specified in a protocol. In this case, the network device does not need to send the SSB time-domain structure to the terminal device, and the terminal device does not need to receive the SSB time-domain structure either, but can directly determine the SSB time-domain structure based on the protocol, thereby reducing signaling overheads.

According to a second aspect, a second type of communication method is provided, and the method includes: A network device generates at least one SSB, where one of the at least one SSB includes at least one of a PSS, an SSS, or a PBCH, the SSB occupies (N+M+X) time units, and a time-domain structure of the SSB is as follows: in the SSB, the PSS occupies N time units, the SSS occupies M time units, and the PBCH occupies X time units, where each time unit includes Y symbols, N is an integer greater than or equal to 0, M is an integer greater than or equal to 0, X is an integer greater than or equal to 0, N, X, and M are not all 0, and Y is an integer greater than 1. The network device sends the at least one SSB.

The method may be performed by a second communication apparatus. The second communication apparatus may be a network device or a communication apparatus that can support a network device in implementing a function required in the method. Certainly, the second communication apparatus may alternatively be another communication apparatus, for example, a chip system. Herein, an example in which the second communication apparatus is the network device is used.

With reference to the second aspect, in a possible implementation of the second aspect, Y=4.

With reference to the second aspect, in a possible implementation of the second aspect, the (N+M+X) time units are discontinuous in time domain.

With reference to the second aspect, in a possible implementation of the second aspect, a time unit 2*i and a time unit 2*i+1 in the (N+M+X) time units are continuous in time domain, and the time unit 2*i+1 and a time unit 2*(i+1) are discontinuous in time domain, where i is any one of 0, 1, ..., and $\left\lfloor \dfrac{N+M+X}{2} \right\rfloor$.

Optionally, the (N+M+X) time units are numbered from 0. Further, numbers of the (N+M+X) time units increase in ascending order in time domain.

Optionally, the (N+M+X) time units are numbered from any number. Further, numbers of the (N+M+X) time units increase in ascending order in time domain. For ease of description, a time unit 0 may still indicate an earliest time unit in time domain in the (N+M+X) time units, a time unit 1 may indicate an earlier time unit in time domain in the (N+M+X) time units, and subsequent time units may be sequentially indicated.

With reference to the second aspect, in a possible implementation of the second aspect, the at least one SSB is located in at least one time window, and SSBs located in different time windows have different time-domain structures.

With reference to the second aspect, in a possible implementation of the second aspect, X is greater than or equal to N.

With reference to the second aspect, in a possible implementation of the second aspect, N is greater than or equal to M.

With reference to the second aspect, in a possible implementation of the second aspect, the method further includes: The network device sends first signaling, where the first signaling is used to indicate an SSB time-domain structure, and the SSB time-domain structure is used to receive the at least one SSB.

For technical effects achieved by the second aspect or the possible implementations of the second aspect, refer to the descriptions of the technical effects of the first aspect or the possible implementations of the first aspect.

According to a third aspect, a first type of communication apparatus is provided. For example, the communication apparatus is the first communication apparatus described above. The communication apparatus is configured to perform the method according to any one of the first aspect or the possible implementations of the first aspect. Specifically, the communication apparatus may include modules configured to perform the method according to any one of the first aspect or the possible implementations of the first aspect, for example, include a processing module and a transceiver module that are coupled to each other. For example, the communication apparatus is a terminal device.

The transceiver module is configured to receive at least one SSB, where one of the at least one SSB includes at least one of a PSS, an SSS, or a PBCH, the SSB occupies (N+M+X) time units, and a time-domain structure of the SSB is as follows: in the SSB, the PSS occupies N time units, the SSS occupies M time units, and the PBCH occupies X time units, where each time unit includes Y symbols, N is an integer greater than or equal to 0, M is an integer greater than or equal to 0, X is an integer greater than or equal to 0, N, X, and M are not all 0, and Y is an integer greater than 1.

The processing module is configured to perform synchronization and/or obtain a system message based on the received at least one SSB.

With reference to the third aspect, in a possible implementation of the third aspect, Y=4.

With reference to the third aspect, in a possible implementation of the third aspect, the (N+M+X) time units are discontinuous in time domain.

With reference to the third aspect, in a possible implementation of the third aspect, a time unit 2*i and a time unit 2*i+1 in the (N+M+X) time units are continuous in time domain, and the time unit 2*i+1 and a time unit 2*(i+1) are discontinuous in time domain, where i is any one of 0, 1, ..., and $\left\lfloor \dfrac{N+M+X}{2} \right\rfloor$. The (N+M+X) time units are numbered from 0.

With reference to the third aspect, in a possible implementation of the third aspect, the at least one SSB is located in at least one time window, and SSBs located in different time windows have different time-domain structures.

With reference to the third aspect, in a possible implementation of the third aspect, X is greater than or equal to N.

With reference to the third aspect, in a possible implementation of the third aspect, N is greater than or equal to M.

With reference to the third aspect, in a possible implementation of the third aspect,

the transceiver module is further configured to: before receiving the at least one SSB, receive first signaling, where the first signaling is used to indicate an SSB time-domain structure; and

the transceiver module is configured to receive the at least one SSB in the following manner: receive the at least one SSB based on the SSB time-domain structure.

For technical effects achieved by the third aspect or the possible implementations of the third aspect, refer to the descriptions of the technical effects of the first aspect or the possible implementations of the first aspect.

According to a fourth aspect, a second type of communication apparatus is provided. For example, the communication apparatus is the second communication apparatus described above. The communication apparatus is configured to perform the method according to any one of the second aspect or the possible implementations of the second aspect. Specifically, the communication apparatus may include modules configured to perform the method according to any one of the second aspect or the possible implementations of the second aspect, for example, include a processing module and a transceiver module that are coupled to each other. For example, the communication apparatus is a network device.

The processing module is configured to generate at least one SSB, where one of the at least one SSB includes at least one of a PSS, an SSS, or a PBCH, the SSB occupies (N+M+X) time units, and a time-domain structure of the SSB is as follows: in the SSB, the PSS occupies N time units, the SSS occupies M time units, and the PBCH occupies X time units, where each time unit includes Y symbols, N is an integer greater than or equal to 0, M is an integer greater than or equal to 0, X is an integer greater than or equal to 0, N, X, and M are not all 0, and Y is an integer greater than 1.

The transceiver module is configured to send the at least one SSB.

With reference to the fourth aspect, in a possible implementation of the fourth aspect, Y=4.

With reference to the fourth aspect, in a possible implementation of the fourth aspect, the (N+M+X) time units are discontinuous in time domain.

With reference to the fourth aspect, in a possible implementation of the fourth aspect, a time unit 2*i and a time unit 2*i+1 in the (N+M+X) time units are continuous in time domain, and the time unit 2*i+1 and a time unit 2*(i+1) are discontinuous in time domain, where i is any one of 0, 1, ..., and $\left\lfloor \dfrac{N+M+X}{2} \right\rfloor$. The (N+M+X) time units are numbered from 0.

Optionally, the (N+M+X) time units are numbered from 0. Further, numbers of the (N+M+X) time units increase in ascending order in time domain.

Optionally, the (N+M+X) time units are numbered from any number. Further, numbers of the (N+M+X) time units increase in ascending order in time domain. For ease of description, a time unit 0 may still indicate an earliest time unit in time domain in the (N+M+X) time units, a time unit 1 may indicate an earlier time unit in time domain in the (N+M+X) time units, and subsequent time units may be sequentially indicated.

With reference to the fourth aspect, in a possible implementation of the fourth aspect, the at least one SSB is located in at least one time window, and SSBs located in different time windows have different time-domain structures.

With reference to the fourth aspect, in a possible implementation of the fourth aspect, X is greater than or equal to N.

With reference to the fourth aspect, in a possible implementation of the fourth aspect, N is greater than or equal to M.

With reference to the fourth aspect, in a possible implementation of the fourth aspect, the transceiver module is further configured to send first signaling, where the first signaling is used to indicate an SSB time-domain structure, and the SSB time-domain structure is used to receive the at least one SSB.

For technical effects achieved by the fourth aspect or the possible implementations of the fourth aspect, refer to the descriptions of the technical effects of the second aspect or the possible implementations of the second aspect.

According to a fifth aspect, a third type of communication apparatus is provided. For example, the communication apparatus is the first communication apparatus described above. The communication apparatus includes a processor and a transceiver, configured to implement the method according to any one of the first aspect or the possible designs of the first aspect. For example, the communication apparatus is a chip disposed in a communication device. For example, the communication device is a terminal device. For example, the transceiver is implemented by using an antenna, a feeder, and a codec in the communication device. Alternatively, if the communication apparatus is the chip disposed in the communication device, the transceiver is, for example, a communication interface in the chip. The communication interface is connected to a radio frequency transceiver component in the communication device, to receive and send information by using the radio frequency transceiver component.

The transceiver is configured to receive at least one SSB, where one of the at least one SSB includes at least one of a PSS, an SSS, or a PBCH, the SSB occupies (N+M+X) time units, and a time-domain structure of the SSB is as follows: in the SSB, the PSS occupies N time units, the SSS occupies M time units, and the PBCH occupies X time units, where each time unit includes Y symbols, N is an integer greater than or equal to 0, M is an integer greater than or equal to 0, X is an integer greater than or equal to 0, N, X, and M are not all 0, and Y is an integer greater than 1.

The processor is configured to perform synchronization and/or obtain a system message based on the received at least one SSB.

With reference to the fifth aspect, in a possible implementation of the fifth aspect, Y=4.

With reference to the fifth aspect, in a possible implementation of the fifth aspect, the (N+M+X) time units are discontinuous in time domain.

With reference to the fifth aspect, in a possible implementation of the fifth aspect, a time unit 2*i and a time unit 2*i+1 in the (N+M+X) time units are continuous in time domain, and the time unit 2*i+1 and a time unit 2*(i+1) are discontinuous in time domain, where i is any one of 0, 1, ..., and $\left\lfloor \dfrac{N+M+X}{2} \right\rfloor$. The (N+M+X) time units are numbered from 0.

Optionally, the (N+M+X) time units are numbered from 0. Further, numbers of the (N+M+X) time units increase in ascending order in time domain.

Optionally, the (N+M+X) time units are numbered from any number. Further, numbers of the (N+M+X) time units increase in ascending order in time domain. For ease of description, a time unit 0 may still indicate an earliest time unit in time domain in the (N+M+X) time units, a time unit 1 may indicate an earlier time unit in time domain in the (N+M+X) time units, and subsequent time units may be sequentially indicated.

With reference to the fifth aspect, in a possible implementation of the fifth aspect, the at least one SSB is located in at least one time window, and SSBs located in different time windows have different time-domain structures.

With reference to the fifth aspect, in a possible implementation of the fifth aspect, X is greater than or equal to N.

With reference to the fifth aspect, in a possible implementation of the fifth aspect, N is greater than or equal to M.

With reference to the fifth aspect, in a possible implementation of the fifth aspect,

the transceiver is further configured to: before receiving the at least one SSB, receive first signaling, where the first signaling is used to indicate an SSB time-domain structure; and
the transceiver is configured to receive the at least one SSB in the following manner: receive the at least one SSB based on the SSB time-domain structure.

For technical effects achieved by the fifth aspect or the possible implementations of the fifth aspect, refer to the descriptions of the technical effects of the first aspect or the possible implementations of the first aspect.

According to a sixth aspect, a fourth type of communication apparatus is provided. For example, the communication apparatus is the second communication apparatus described above. The communication apparatus includes a processor and a transceiver, configured to implement the method according to any one of the second aspect or the possible designs of the second aspect. For example, the communication apparatus is a chip disposed in a communication device. For example, the communication device is a network device. For example, the transceiver is implemented by using an antenna, a feeder, and a codec in the communication device. Alternatively, if the communication apparatus is the chip disposed in the communication device, the transceiver is, for example, a communication interface in the chip. The communication interface is connected to a radio frequency transceiver component in the communication device, to receive and send information by using the radio frequency transceiver component.

The processor is configured to generate at least one SSB, where one of the at least one SSB includes at least one of a PSS, an SSS, or a PBCH, the SSB occupies (N+M+X) time units, and a time-domain structure of the SSB is as follows: in the SSB, the PSS occupies N time units, the SSS occupies M time units, and the PBCH occupies X time units, where each time unit includes Y symbols, N is an integer greater than or equal to 0, M is an integer greater than or equal to 0, X is an integer greater than or equal to 0, N, X, and M are not all 0, and Y is an integer greater than 1.

The transceiver is configured to send the at least one SSB.

With reference to the sixth aspect, in a possible implementation of the sixth aspect, Y=4.

With reference to the sixth aspect, in a possible implementation of the sixth aspect, the (N+M+X) time units are discontinuous in time domain.

With reference to the sixth aspect, in a possible implementation of the sixth aspect, a time unit 2*i and a time unit 2*i+1 in the (N+M+X) time units are continuous in time domain, and the time unit 2*i+1 and a time unit 2*(i+1) are discontinuous in time domain, where i is any one of 0, 1, ..., and $\left\lfloor \dfrac{N+M+X}{2} \right\rfloor$. The (N+M+X) time units are numbered from 0.

Optionally, the (N+M+X) time units are numbered from 0. Further, numbers of the (N+M+X) time units increase in ascending order in time domain.

Optionally, the (N+M+X) time units are numbered from any number. Further, numbers of the (N+M+X) time units increase in ascending order in time domain. For ease of description, a time unit 0 may still indicate an earliest time unit in time domain in the (N+M+X) time units, a time unit 1 may indicate an earlier time unit in time domain in the (N+M+X) time units, and subsequent time units may be sequentially indicated.

With reference to the sixth aspect, in a possible implementation of the sixth aspect, the at least one SSB is located in at least one time window, and SSBs located in different time windows have different time-domain structures.

With reference to the sixth aspect, in a possible implementation of the sixth aspect, X is greater than or equal to N.

With reference to the sixth aspect, in a possible implementation of the sixth aspect, N is greater than or equal to M.

With reference to the sixth aspect, in a possible implementation of the sixth aspect, the transceiver is further configured to send first signaling, where the first signaling is used to indicate an SSB time-domain structure, and the SSB time-domain structure is used to receive the at least one SSB.

For technical effects achieved by the sixth aspect or the possible implementations of the sixth aspect, refer to the descriptions of the technical effects of the second aspect or the possible implementations of the second aspect.

According to a seventh aspect, a fifth type of communication apparatus is provided. The communication apparatus may be the first communication apparatus in the foregoing method designs. For example, the communication apparatus is a chip disposed in a terminal device. The communication apparatus includes: a memory, configured to store computer-executable program code; and a processor, where the processor is coupled to the memory. The program code stored in the memory includes instructions, and when the processor executes the instructions, the fifth type of communication apparatus is enabled to perform the method according to any one of the first aspect or the possible implementations of the first aspect.

The fifth type of communication apparatus may further include a communication interface. The communication interface may be a transceiver in the terminal device, for example, implemented by using an antenna, a feeder, and a codec in the communication apparatus. Alternatively, if the fifth type of communication apparatus is the chip disposed in the terminal device, the communication interface may be an input/output interface in the chip, for example, an input/output pin.

According to an eighth aspect, a sixth type of communication apparatus is provided. The communication apparatus may be the second communication apparatus in the foregoing method designs. For example, the communication apparatus is a chip disposed in a network device. The communication apparatus includes: a memory, configured to store computer-executable program code; and a processor, where the processor is coupled to the memory. The program code stored in the memory includes instructions, and when the processor executes the instructions, the sixth type of communication apparatus is enabled to perform the method according to any one of the second aspect or the possible implementations of the second aspect.

The sixth type of communication apparatus may further include a communication interface. The communication interface may be a transceiver in the network device, for example, implemented by using an antenna, a feeder, and a codec in the communication apparatus. Alternatively, if the sixth type of communication apparatus is the chip disposed in the network device, the communication interface may be an input/output interface in the chip, for example, an input/output pin.

According to a ninth aspect, a communication system is provided. The communication system may include the first type of communication apparatus according to the third aspect, the third type of communication apparatus according to the fifth aspect, or the fifth type of communication apparatus according to the seventh type; and the second type of communication apparatus according to the fourth aspect, the fourth type of communication apparatus according to the sixth aspect, or the sixth type of communication apparatus according to the eighth aspect.

According to a tenth aspect, a computer storage medium is provided. The computer-readable storage medium stores instructions, and when the instructions are run on a computer, the computer is enabled to perform the method according to any one of the first aspect or the possible designs of the first aspect.

According to an eleventh aspect, a computer storage medium is provided. The computer-readable storage medium stores instructions, and when the instructions are run on a computer, the computer is enabled to perform the method according to any one of the second aspect or the possible designs of the second aspect.

According to a twelfth aspect, a computer program product including instructions is provided. The computer program product stores the instructions, and when the computer program product runs on a computer, the computer is enabled to perform the method according to any one of the first aspect or the possible designs of the first aspect.

According to a thirteenth aspect, a computer program product including instructions is provided. The computer program product stores the instructions, and when the computer program product runs on a computer, the computer is enabled to perform the method according to any one of the second aspect or the possible designs of the second aspect.

In the embodiments of this application, because the at least one of the PSS, the SSS, or the PBCH in one SSB occupies a relatively large quantity of symbols, deep coverage or super-distance coverage can be implemented. Therefore, the SSB provided in the embodiments of this application can not only meet the requirement of the broadband terminal device, but also meet the requirement of the narrowband terminal device.

**BRIEF DESCRIPTION OF DRAWINGS**

FIG. 1 is a schematic diagram of an existing SSB;
FIG. 2 is a schematic diagram of an SS burst set;
FIG. 3 is a schematic diagram of an application scenario according to an embodiment of this application;
FIG. 4 is a schematic diagram of another application scenario according to an embodiment of this application;
FIG. 5 is a flowchart of a communication method according to an embodiment of this application;
FIG. 6A to FIG. 6C are schematic diagrams of several different time-domain structures of an SSB according to an embodiment of this application;
FIG. 7A and FIG. 7B are schematic diagrams in which (N+M+X) time units included in an SSB are discontinuous in time domain according to an embodiment of this application;
FIG. 8 is a schematic diagram in which (N+M+X) time units included in an SSB are partially discontinuous in time domain according to an embodiment of this application;
FIG. 9 is a schematic diagram in which at least one SSB is located in at least one time window according to an embodiment of this application;
FIG. 10 is a schematic diagram of a communication apparatus that can implement a function of a terminal device according to an embodiment of this application;
FIG. 11 is a schematic diagram of a communication apparatus that can implement a function of a network device according to an embodiment of this application; and
FIG. 12A and FIG. 12B are two schematic diagrams of a communication apparatus according to an embodiment of this application.

**DESCRIPTION OF EMBODIMENTS**

To make the objectives, the technical solutions, and advantages of the embodiments of this application clearer, the following further describes the embodiments of this application in detail with reference to the accompanying drawings.

In the following descriptions, some terms in the embodiments of this application are described, to help a person skilled in the art have a better understanding.

(1) A terminal device includes a device that provides a user with voice and/or data connectivity, for example, may include a handheld device having a wireless connection function, or a processing device connected to a wireless modem. The terminal device may communicate with a core network through a radio access network (radio access network, RAN) and exchange voice and/or data with the RAN. The terminal device may include user equipment (user equipment, UE), a wireless terminal device, a mobile terminal device, a device-to-device (device-to-device, D2D) communication terminal device, a V2X terminal device, a machine-to-machine/machine-type communications (machine-to-machine/machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, or a portable, pocket-sized, handheld, or computer built-in mobile apparatus, or the like. For example, the terminal device is a device such as a personal communications service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capacity, or a device with a limited computing capability. For example, the terminal device includes an information sensing device, for example, a barcode, radio frequency identification (radio frequency identification, RFID), a sensor, a global positioning system (global positioning system, GPS), or a laser scanner.

As an example instead of a limitation, in the embodiments of this application, the terminal device may alternatively be a wearable device. The wearable device may also be referred to as a wearable intelligent device, an intelligent wearable device, or the like, and is a generic term for wearable devices that are developed by applying wearable technologies to intelligent designs of daily wear, such as glasses, gloves, watches, clothes, and shoes. The wearable device is a portable device that can be directly worn on a body or integrated into clothes or an accessory of a user. The wearable device is not only a hardware device, but is used to implement powerful functions through software support, data exchange, and cloud interaction. Generalized wearable intelligent devices include full-featured and large-size devices, such as smart watches or smart glasses, that can implement complete or partial functions without depending on smartphones; and devices, such as various smart bands, smart helmets, or smart jewelry for monitoring physical signs, that focus on only one type of application functions and need to work with other devices such as smartphones.

However, if the various terminal devices described above are located in a vehicle (for example, placed in the vehicle or mounted in the vehicle), the terminal devices may be considered as vehicle-mounted terminal devices. For example, the vehicle-mounted terminal devices are also referred to as on-board units (on-board unit, OBU).

In the embodiments of this application, the terminal device may further include a relay (relay). Alternatively, it may be understood that any device that can perform data communication with a base station may be considered as a terminal device.

Two types of terminal devices: a broadband terminal device and a narrowband terminal device are used in the embodiments of this application. Conditions that the broadband terminal device and the narrowband terminal device need to satisfy include but are not limited to the following:

① In the embodiments of this application, a maximum bandwidth capability of the narrowband terminal device is less than or equal to a minimum bandwidth capability of the broadband terminal device. For example, the narrowband terminal device is a narrowband internet of things (narrow band internet of things, NB-IoT) terminal device, and the broadband terminal device is a long term evolution (long term evolution, LTE) terminal device. A data transmission bandwidth of the NB-IoT terminal device is one RB, that is, 180 kHz or 200 kHz (including a guard band). Because a frequency resource occupied by a PSS or an SSS in an LTE system is six RBs, that is, 1.08 MHz or 1.44 MHz (including the guard band), the minimum bandwidth capability of the broadband terminal device may be considered to be not less than 1.08 MHz. In this case, it may be considered that the maximum bandwidth capability of the narrowband terminal device is less than or equal to the minimum bandwidth capability of the broadband terminal device. For another example, the narrowband terminal device is an NB-IoT terminal device, and the broadband terminal device is an NR terminal device. Based on a design of an SSB in an NR system, a minimum bandwidth capability of the NR terminal device may be considered as 20 RBs, where each RB includes 12 subcarriers. In the NR system, a subcarrier spacing is related to a frequency band deployed in the NR system, and is not a fixed value. For example, if a minimum subcarrier spacing is 15 kHz, the minimum bandwidth capability may be considered to be greater than or equal to 20*12*15=3.6 MHz. It may still be considered that the maximum bandwidth capability of the narrowband terminal device is less than or equal to the minimum bandwidth capability of the broadband terminal device.

② In the embodiments of this application, it may also be considered that a minimum bandwidth capability of the narrowband terminal device is less than a minimum bandwidth capability of the broadband terminal device.

If a data transmission channel is established between a terminal device and a network device, generally, the terminal device needs to first receive a synchronization channel and a broadcast channel that are sent by the network device. Therefore, it may be considered that a bandwidth corresponding to the synchronization channel and the broadcast channel that are sent by the network device is the minimum bandwidth capability that the terminal device needs to have.

Based on ① and ②, the narrowband terminal device may also be considered as a bandwidth limited (bandwidth limited, BL) terminal device. It should be noted that the BL terminal device may also have another bandwidth feature other than that is described in ① and ②. This is not specifically limited.

③ In the embodiments of this application, it may alternatively be considered that the narrowband terminal device needs to maintain normal data communication with a network device by using a coverage enhancement (coverage enhancement, CE) technology. However, the broadband terminal device may maintain normal data communication with the network device even without using the CE technology. The CE technology includes but is not limited to a technology such as repeated data transmission or power boosting. Alternatively, if both the broadband terminal device and the narrowband terminal device need to maintain normal data communication with a network device through repeated data transmission in some scenarios, a maximum quantity of repetition times required by the narrowband terminal device to maintain data communication with the network device is less than a maximum quantity of repetition times required by the broadband terminal device to maintain data communication with the network device.

④ In the embodiments of this application, the narrowband terminal device may alternatively be considered as a low power wide area access (low power wide coverage access, LPWA) terminal device, and the broadband terminal device may be considered as an enhanced mobile broadband (enhanced mobile broadband, eMBB) terminal device or an ultra-reliable low-latency communication (ultra-reliability low-latency communication, URLLC) terminal device.

In addition, in the embodiments of this application, a same terminal device may have both a narrowband capability and a broadband capability. In other words, the terminal device may serve as both a broadband terminal device and a narrowband terminal device. In other words, the terminal device has both a non-CE capability and a CE capability. The terminal device may maintain normal communication with an access network device without depending on a CE technology, or may maintain normal communication with an access network device depending on a CE technology. Alternatively, it is possible that a terminal device has only a narrowband capability and does not have a broadband capability. In this case, the terminal device is only a narrowband terminal device but not a broadband terminal device or the like. To be specific, the terminal device can only depend on the CE technology to maintain normal communication with an access network device. Both the two types of terminal devices are applicable to the technical solutions provided in the embodiments of this application.

(2) A network device includes, for example, an access network (access network, AN) device such as a base station (for example, an access point), and may be a device that communicates with a wireless terminal device over an air interface through one or more cells in an access network. Alternatively, for example, a network device in a V2X technology is a road side unit (road side unit, RSU). The base station may be configured to mutually convert a received over-the-air frame and a received internet protocol (IP) packet, and serve as a router between the terminal device and other parts of the access network, where the other parts of the access network may include an IP network. The RSU may be a fixed infrastructure entity supporting application of the V2X, and may exchange a message with another entity supporting application of the V2X. The network device may further coordinate attribute management of the air interface. For example, the network device may include an evolved NodeB (NodeB, eNB, or e-NodeB, evolutional Node B) in an LTE system or a long term evolution-advanced (long term evolution-advanced, LTE-A) system, may include a next generation NodeB (next generation node B, gNB) in a 5G NR system, or may include a centralized unit (centralized unit, CU) and a distributed unit (distributed unit, DU) in a cloud access network (cloud radio access network, Cloud RAN) system. This is not limited in the embodiments of this application.

(3) In the embodiments of this application, the mentioned cell may be a cell corresponding to a base station, and the cell may belong to a macro base station, or may belong to a base station corresponding to a small cell (small cell). The small cell herein may include: a metro cell (metro cell), a micro cell (micro cell), a pico cell (pico cell), a femto cell (femto cell), and the like. These small cells have characteristics of small coverage and low transmit power, and are applicable to providing a high-speed data transmission service.

On a carrier in an LTE system or an NR system, a plurality of cells may work at a same frequency at the same time. In some special scenarios, it may be considered that a concept of the carrier is equivalent to a concept of the cell. For example, in a carrier aggregation (carrier aggregation, CA) scenario, when a secondary carrier is configured for a terminal device, both a carrier index of the secondary carrier and a cell identity (cell identify, Cell ID) of a secondary cell working on the secondary carrier are carried. In this case, it may be considered that the concept of the carrier is equivalent to the concept of the cell. For example, that the terminal device accesses a carrier is equivalent to that the terminal device accesses a cell. Similar descriptions are also provided for a dual connectivity (dual connectivity, DC) scenario. In the embodiments of this application, the concept of the cell is used for description. In an NR system, if one cell or one carrier has only one active bandwidth part (bandwidth part, BWP), it may also be considered that the concept of the cell is equivalent to that of the BWP.

(4) The terms "system" and "network" may be used interchangeably in the embodiments of this application. "At least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of the items, including any combination of one item (piece) or a plurality of items (pieces). For example, at least one item (piece) of a, b, or c may indicate a, b, c, a and b, a and c, b and c, or a, b, and c, where a, b, and c may be singular or plural.

In addition, unless otherwise stated, ordinal numbers such as "first" and "second" in the embodiments of this application are used to distinguish between a plurality of objects, but are not intended to limit a sequence, a time sequence, priorities, or importance of the plurality of objects. For example, a first synchronization signal and a second synchronization signal are merely intended to distinguish between different synchronization signals, but do not indicate that the two synchronization signals are different in content, a priority, a sending sequence, importance, or the like.

The foregoing describes some concepts in the embodiments of this application. The following describes technical features in the embodiments of this application.

5G NR, a global 5G standard based on a new OFDM-based air interface design, is also the important basis for the next generation cellular mobile technology. Various services are provided by using 5G technology, such as eMBB, URLLC, and massive machine type communication (massive machine-type communication, mMTC) services.

Diversified services in the NR system require that the NR system is designed to meet access requirements of terminal devices with different bandwidth capabilities. For example, an eMBB terminal device may access the NR system by obtaining broadband information of the NR system, and some mMTC terminal devices may access the NR system by obtaining narrowband information of the NR system due to consideration of design costs, low power consumption, or the like. For another example, even for a same service type, for example, mMTC, there are different service rate requirements. For example, for use cases such as meter reading, tracking, or on-demand payment, a terminal device has a low requirement on a data transmission rate, but usually requires deep coverage, and may usually perform access through narrowband. In addition, for example, surveillance video backhaul has a relatively high requirement on the data transmission rate. Therefore, it can be considered as a terminal device with a mid- or high-end capability, and may usually perform access through broadband.

In addition, with diversification of services in the NR system, capabilities of terminal devices in the NR system are also diversified, and the terminal devices can work in different system bandwidths.

In an existing NR system, a terminal device may implement synchronization with a base station, obtain a system message, and the like by receiving an SSB. A PSS, an SSS, and a PBCH jointly form one SSB. As shown in FIG. 1, in time domain, one SSB occupies four OFDM symbols, namely, a symbol 0 to a symbol 3. In frequency domain, one SSB occupies 20 RBs, that is, 240 subcarriers, and in the 20 RBs, the subcarriers are numbered from 0 to 239. The PSS is located on the middle 127 subcarriers in the symbol 0, and the SSS is located on the middle 127 subcarriers in the symbol 2. To protect the PSS and the SSS, energy of different guard subcarriers is set to 0, that is, the guard subcarriers are not used to carry signals, and eight subcarriers and nine subcarriers are respectively reserved on two sides of the SSS as guard band carriers. In FIG. 1, blank areas on upper and lower sides of the SSS are guard subcarriers. The PBCH occupies all subcarriers in the symbol 1 and the symbol 3, and some subcarriers (subcarriers in remaining subcarriers other than guard subcarriers) in the remaining subcarriers other than the subcarriers occupied by the SSS in all subcarriers in the symbol 2.

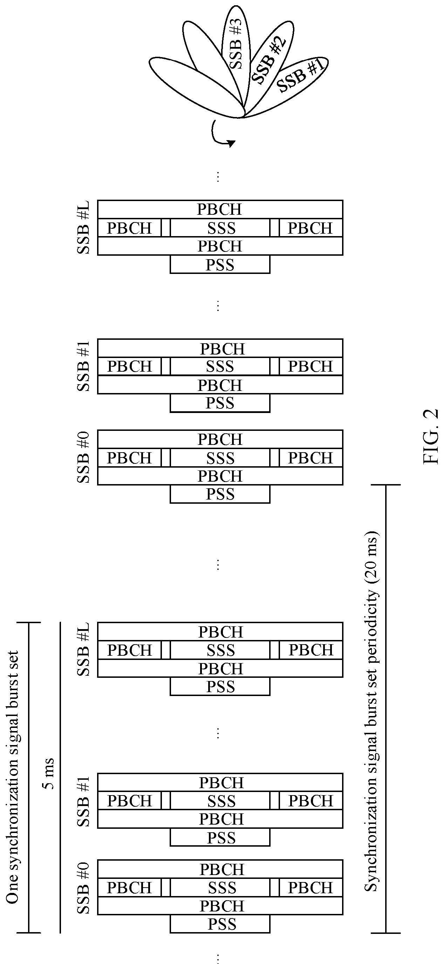

A synchronization burst set (synchronization signal burst set, SS burst set) is a set of SSBs included in one beam sweep (beam sweep). An SS burst set periodicity is a periodicity of an SSB corresponding to a specific beam, and may be configured as 5 ms (millisecond), 10 ms, 20 ms, 40 ms, 80 ms, 160 ms, or the like. 20 ms is a default periodicity, that is, a periodicity assumed when the terminal device initially searches for a cell. Currently, there are a maximum of $L_{max}$ SSBs in one SS burst set periodicity, where $L_{max}$=4, 8, or 64. When a carrier frequency is less than or equal to 3 GHz, Lmax=4. To be specific, there are a maximum of four SSBs in one SS burst set periodicity, and a maximum of four beam sweeps can be supported. Each SS burst set is always within an interval of 5 ms, and is a first half part or a second half part of a frame (frame) of 10 ms. For a schematic diagram of the SS burst set, refer to FIG. 2. In FIG. 2, an example in which an SS burst set periodicity is 20 ms and one SS burst set includes L SSBs is used.

Future terminal devices have a plurality of bandwidth capabilities, for example, a narrowband capability and a broadband capability, and also face more diversified application scenarios and service scenarios. A narrowband terminal device whose bandwidth is fewer than 20 RBs cannot detect a current SSB. In deep coverage and super-distance coverage scenarios, performance of an existing SSB needs to be enhanced.

In view of this, the technical solutions in the embodiments of this application are provided. The embodiments of this application provide a new SSB. The SSB may include a PSS that occupies N time units, an SSS that occupies M time units, and a PBCH that occupies X time units. This is equivalent to that these signals may occupy a plurality of symbols in time domain for sending. In addition, a range of frequency domain of the SSB is not limited in the embodiments of this application. For example, the SSB may still occupy 20 RBs in frequency domain, or may occupy fewer than 20 RBs. When the SSB occupies fewer than 20 RBs, at least one of the PSS, the SSS, or the PBCH occupies a relatively large quantity of symbols, so that deep coverage or super-distance coverage can be implemented. Therefore, the SSB provided in the embodiments of this application can not only meet a requirement of a broadband terminal device, but also meet a requirement of a narrowband terminal device; and is applicable to deep coverage or super-distance coverage scenarios, and an IoT service.

The technical solutions provided in the embodiments of this application may be used in a wireless communication system, including a 4.5G or 5G wireless communication system, a further LTE-based or NR-based evolved system, and a future wireless communication system.

A first application scenario in the embodiments of this application may be a wireless communication system that can simultaneously serve terminal devices with different bandwidth capabilities, for example, an LTE system or an NR system that can serve both an mMTC terminal device and an eMBB terminal device.

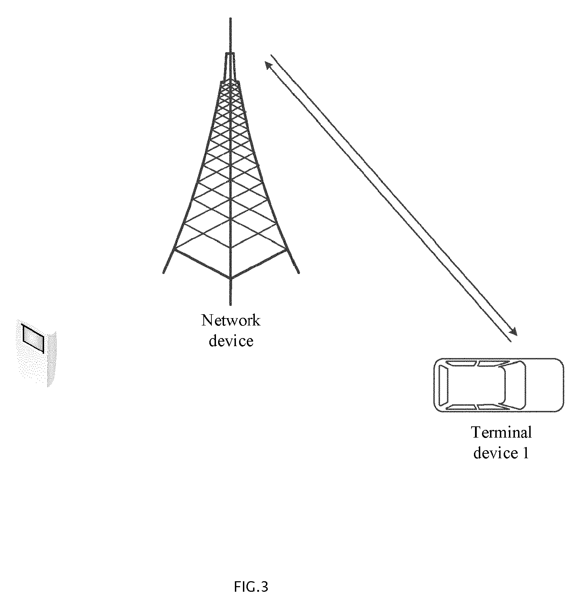

FIG. 3 shows a network architecture used in an embodiment of this application. The network architecture shown in FIG. 3 is applicable to the first application scenario in the embodiments of this application.

In FIG. 3, a network device and two terminal devices are included, and the terminal devices are a terminal device 1 and a terminal device 2. Both the terminal devices may be connected to the network device. For example, the terminal device 1 is a terminal device that supports a broadband capability, for example, an NR terminal device in an existing release 15; and the terminal device 2 is a terminal device that supports a narrowband capability, for example, a narrowband mMTC terminal device in a future release. Certainly, a quantity of terminal devices in FIG. 3 is merely an example. During actual application, the network device may provide services for a plurality of terminal devices.

A second application scenario in the embodiments of this application may be a wireless communication system that can serve only a terminal device with a narrowband capability, for example, an LTE system or an NR system that serves only an NB-IoT terminal device.

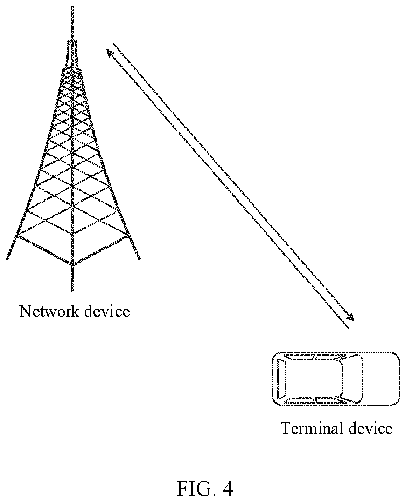

FIG. 4 shows another network architecture used in an embodiment of this application. The network architecture shown in FIG. 4 is applicable to the second application scenario in the embodiments of this application.

In FIG. 4, a network device and a terminal device are included. The terminal device may be connected to the network device. For example, the terminal device is a terminal device that supports a narrowband capability, for example, an NB-IoT terminal device. Certainly, a quantity of terminal devices in FIG. 4 is merely an example. During actual application, the network device may provide services for a plurality of terminal devices.

The network device in FIG. 3 or FIG. 4 is, for example, an access network device, for example, a base station. In different systems, the network device corresponds to different devices. For example, the network device may correspond to an eNB in a 4th generation (the 4th generation, 4G) mobile communication technology system, and correspond to a 5G network device, such as a gNB, in a 5G system.

With reference to the accompanying drawings, the following describes the technical solutions provided in the embodiments of this application.

Before the embodiments are specifically described, a frame structure (frame structure) in an existing NR system is first described, to help understand the solutions in the embodiments of this application. However, this does not mean that the embodiments of this application are applicable only to the NR system. In the NR system, each frame $N_{\text{symb}}^{\text{subframe},\mu} = N_{\text{symb}}^{\text{slot}} N_{\text{slot}}^{\text{subframe},\mu}$ includes 10 subframes (subframe) with a length of 1 ms, and one subframe includes $N_{\text{symb}}^{subframe,\mu}$ symbols, where $N_{\text{symb}}^{subframe,\mu}$ indicates a quantity of symbols included in one subframe at a subcarrier spacing $\mu$, $N_{\text{symb}}^{slot}$ indicates a quantity of symbols included in one slot, and $N_{\text{slot}}^{subframe,\mu}$ indicates a quantity of slots (slot) included in one subframe at a subcarrier spacing $\mu$. Each frame is divided into two half-frames (half-frame) of the same size. A half-frame 0 includes subframes 0 to 4, and a half-frame 1 includes subframes 5 to 9. For a configuration of the subcarrier spacing $\mu$, one subframe includes $N_{\text{slot}}^{subframe,\mu}$ slots, and the slots in the subframe are numbered as follows: $n_s^{\mu} \in \{0, ..., N_{\text{slot}}^{subframe,\mu}-1\}$; and a frame includes $N_{\text{slot}}^{frame,\mu}$ slots, and the slots in the frame are numbered as follows: $n_{s,f}^{\mu} \in \{0, ..., N_{\text{slot}}^{frame,\mu}-1\}$. Values of $N_{\text{symb}}^{slot}$, $N_{\text{slot}}^{frame,\mu}$, and $N_{\text{slot}}^{subframe,\mu}$ are shown in Table 1 (normal cyclic prefix (normal cyclic prefix)) and Table 2 (extended cyclic prefix (extended cyclic prefix)). When $N_{symb}^{slot}=14$ symbols included in one slot are respectively denoted as a symbol 0, a symbol 1, ..., a symbol 12, and a symbol 13.

**Table 1**

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

**Table 2**

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

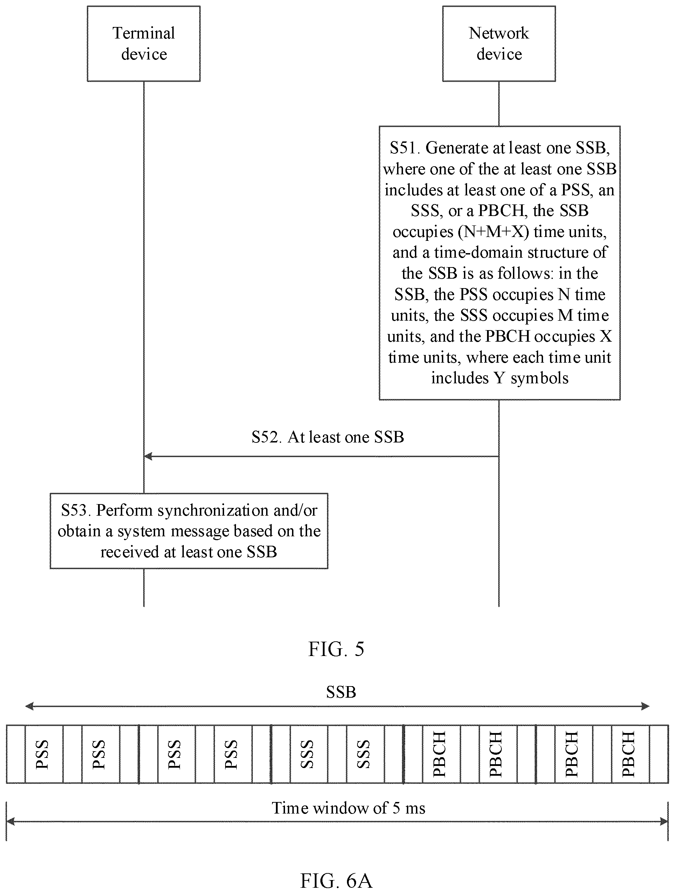

An embodiment of this application provides a communication method. FIG. 5 is a flowchart of the method. In the following descriptions, an example in which the method is used in the network architecture shown in FIG. 3 or FIG. 4 is used. In addition, the method may be performed by two communication apparatuses. The two communication apparatuses are, for example, a first communication apparatus and a second communication apparatus. The first communication apparatus may be a network device or a communication apparatus that can support a network device in implementing a required function of the method, or may be a terminal device or a communication apparatus that can support a terminal device in implementing a required function of the method. Certainly, the first communication apparatus may alternatively be another communication apparatus, for example, a chip system. The second communication apparatus may be a network device or a communication apparatus that can support a network device in implementing a required function of the method, or may be a terminal device or a communication apparatus that can support a terminal device in implementing a required function of the method. Certainly, the second communication apparatus may alternatively be another communication apparatus, for example, a chip system. In addition, implementations of the first communication apparatus and the second communication apparatus are not limited. For example, the first communication apparatus may be a network device, and the second communication apparatus is a terminal device; the first communication apparatus is a network device, and the second communication apparatus is a communication apparatus that can support a terminal device in implementing a required function of the method; or the first communication apparatus is a communication apparatus that can support a network device in implementing a required function of the method, and the second communication apparatus is a communication apparatus that can support a terminal device in implementing a required function of the method. For example, the network device is a base station.

For ease of description, the following uses an example in which the method is performed by a network device and a terminal device, that is, an example in which the first communication apparatus is a network device and the second communication apparatus is a terminal device. If this embodiment is used in the network architecture shown in FIG. 3, the network device described below may be the network device in the network architecture shown in FIG. 3, and the terminal device described below may be the terminal device 1 or the terminal device 2 in the network architecture shown in FIG. 3. If this embodiment is used in the network architecture shown in FIG. 4, the network device described below may be the network device in the network architecture shown in FIG. 4, and the terminal device described below may be the terminal device in the network architecture shown in FIG. 4. It should be noted that this embodiment of this application is merely performed by using the network device and the terminal device, and is not limited to this scenario. For example, this embodiment of this application may be performed by using a terminal device and a terminal device. In this case, the network device below may be replaced with a first terminal device, and the terminal device below may be replaced with a second terminal device. The first terminal device may be a terminal device that supports both a broadband capability and a narrowband capability, or a terminal device that supports a narrowband capability. The second terminal device may be a terminal device that supports both a broadband capability and a narrowband capability, or a terminal device that supports a narrowband capability.

S51. The network device generates at least one SSB, where one of the at least one SSB includes at least one of a PSS, an SSS, or a PBCH, the SSB occupies (N+M+X) time units, and a time-domain structure of the SSB is as follows: in the SSB, the PSS occupies N time units, the SSS occupies M time units, and the PBCH occupies X time units, where each time unit includes Y symbols, N is an integer greater than or equal to 0, M is an integer greater than or equal to 0, X is an integer greater than or equal to 0, N, X, and M are not all 0, and Y is an integer greater than 1. The SSB may be any SSB in the at least one SSB, and is not limited to a specific SSB in the at least one SSB.

It should be noted that the PSS and the SSS may be respectively referred to as a first SS and a second SS, and names are not limited in this embodiment of the present invention.

In this embodiment of this application, one SSB may include at least one of the PSS, the SSS, and the PBCH. For example, for an SSB, N is a positive integer, and M and X are 0. In this case, the SSB includes only the PSS. Alternatively, for an SSB, N and X are 0, and M is a positive integer. In this case, the SSB includes only the SSS. Alternatively, for an SSB, X is a positive integer, and N and M are 0. In this case, the SSB includes only the PBCH. Alternatively, for an SSB, N and X are positive integers, and M is 0. In this case, the SSB includes only the PSS and the PBCH. Alternatively, for an SSB, N and M are positive integers, and X is 0. In this case, the SSB includes only the PSS and the SSS. Alternatively, for an SSB, N, M, and X are all positive integers. In this case, the SSB includes the PSS, the SSS, the PBCH. Each of the at least one SSB generated by the network device may include same content. For example, each of the at least one SSB includes only the PSS and the PBCH, or each of the at least one SSB includes the PSS, the SSS, and the PBCH. Alternatively, different SSBs in the at least one SSB include different content. For example, one SSB in the at least one SSB includes only the PBCH, and in addition to the SSB, another SSB in the at least one SSB includes only the PSS and the PBCH.

In S51, a time-domain structure of only one SSB is described. The SSB meets that the PSS occupies the N time units, the SSS occupies the M time units, and the PBCH occupies the X time units. Actually, for the at least one SSB, each SSB may meet the time-domain structure. However, if a quantity of the at least one SSB is greater than 1, quantities of time units occupied by PSSs included in different SSBs in the at least one SSB may be the same or may be different. In other words, for different SSBs in the at least one SSB, corresponding values of N may be the same or may be different. For example, the at least one SSB includes a first SSB and a second SSB. A quantity of time units occupied by a PSS included in the first SSB is 1, that is, N=1 for the first SSB, and a quantity of time units occupied by a PSS included in the second SSB is 1, that is, N=1 for the second SSB. In this case, values of N corresponding to the two SSBs are the same. Alternatively, the at least one SSB includes a first SSB and a second SSB. A quantity of time units occupied by a PSS included in the first SSB is 1, that is, N=1 for the first SSB, and a quantity of time units occupied by a PSS included in the second SSB is 2, that is, N=2 for the second SSB. In this case, values of N corresponding to the two SSBs are different.

Similarly, for the SSS, quantities of time units occupied by SSSs included in different SSBs may be the same or may be different. In other words, for different SSBs in the at least one SSB, corresponding values of M may be the same or may be different.

Similarly, for the PBCH, quantities of time units occupied by PBCHs included in different SSBs may be the same or may be different. In other words, for different SSBs in the at least one SSB, corresponding values of X may be the same or may be different.

In addition, values of N, M, and X in different SSBs do not affect each other. For example, for two SSBs in the at least one SSB, corresponding values of N may be different, but corresponding values of M and X are the same; corresponding values of M are different, but corresponding values of N and X are the same; corresponding values of X are different, but corresponding values of M and N are the same; corresponding values of N and M are different, but corresponding values of X are the same; corresponding values of N and X are different, but corresponding values of M are the same; corresponding values of M and X are different, but corresponding values of N are the same; corresponding values of N, M, and X are the same; or corresponding values of N, M, and X are different.

Values of N, M, and X corresponding to each of the at least one SSB may be configured by the network device, or specified in a protocol and stored in the network device and the terminal device. This is not specifically limited.

In an implementation of the SSB, for one SSB, N may be greater than or equal to M. When the terminal device performs initial access, blind detection is completely performed when the terminal device detects the PSS. The terminal device does not learn of a position of the PSS, and detection is completely implemented through blind detection. To accelerate a speed of the blind detection on the PSS, the network device may configure PSSs in a more dense way in time domain to accelerate the speed of the blind detection on the PSS by the terminal device. However, the terminal device has received the PSS when detecting the SSS. Compared with the PSS, it is relatively easy for the terminal device to detect the SSS. Therefore, a quantity of times that the network device sends the SSS may be less than a quantity of times that the network device sends the PSS. Therefore, N may be greater than M. Certainly, if coverage of the synchronization signal is further improved, N may also be equal to M.

In an implementation of the SSB, for one SSB, X may be greater than or equal to N. Content of PSSs sent by the network device is always the same, and content of SSSs sent by the network device is also always the same.

Therefore, the terminal device may increase energy by receiving the PSSs for a plurality of times, to increase a probability of correctly receiving the PSSs. This is also the same for the SSSs. However, content of PBCHs sent by the network device at different moments may be different. For example, a PBCH sent by the network device in a period of time carries first content, and content carried in a PBCH sent in a next period of time may become second content. Therefore, the terminal device cannot increase receiving accuracy by receiving the PBCHs for a plurality of times in a long time. Therefore, the network device may send the PBCHs for a plurality of times in a short time, to improve PBCH coverage, and increase the receiving accuracy of the terminal device. From this perspective, X may be greater than N. Certainly, X may also be equal to N, or for some other considerations, X may also be less than N.

For example, FIG. 6A is a schematic diagram of an SSB. In the SSB, a PSS occupies four time units, an SSS occupies two time units, and a PBCH occupies four time units. In other words, an example in which N is greater than M and X is equal to N is used for the SSB.

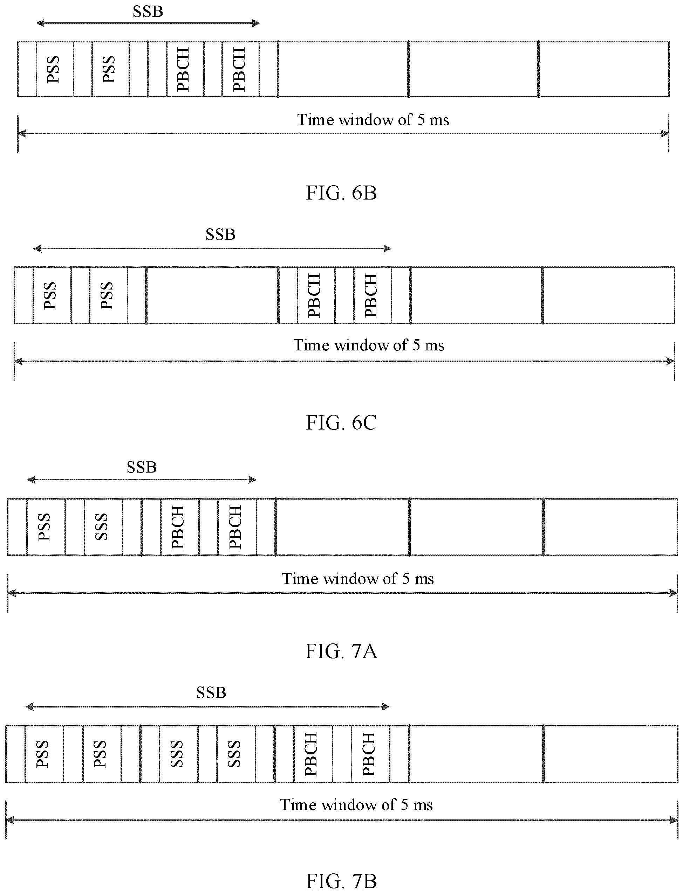

Alternatively, FIG. 6B is a schematic diagram of another SSB. In the SSB, a PSS occupies two time units, an SSS occupies zero time unit, that is, the SSS is not included, and a PBCH occupies two time units. In other words, an example in which N is greater than M and X is equal to N is used for the SSB.

Alternatively, FIG. 6C is a schematic diagram of still another SSB. In the SSB, a PSS occupies two time units, an SSS occupies zero time unit, that is, the SSS is not included, and a PBCH occupies two time units. In other words, an example in which N is greater than M and X is equal to N is used for the SSB. A difference between FIG. 6B and FIG. 6C is that in FIG. 6B, a slot in which the PSS is located is adjacent to a slot in which the PBCH is located, in other words, is continuous, but in FIG. 6C, a slot in which the PSS is located is not adjacent to a slot in which the PBCH is located in FIG. 6C, in other words, is discontinuous.

In FIG. 6A to FIG. 6C, a relatively thick vertical line represents a boundary of a slot.

In this embodiment of this application, the N time units, the M time units, and the X time units are (N+M+X) time units in total. Each of the (N+M+X) time units carries only one type of signal. The (N+M+X) time units may not overlap in time domain, as shown in FIG. 6A, FIG. 6B, FIG. 6C, FIG. 7A, and FIG. 7B. Such a nonoverlapping time-domain structure is more suitable for a narrowband terminal device, because the (N+M+X) time units may be located in a same bandwidth. Certainly, the (N+M+X) time units may partially or completely overlap in time domain. For example, at least two time units in the (N+M+X) time units overlap in time domain, and do not overlap in frequency domain. In other words, the at least two time units are used for frequency division multiplexing. For example, the N time units do not overlap in time domain, and the M time units do not overlap in time domain. However, the N time units partially or completely overlap with the M time units in time domain. In addition, the X time units overlap with neither the N time units nor the M time units. In this solution of partially overlapping or completely overlapping in time domain, the SSB can be transmitted within a relatively short time, so that the network device can switch off a symbol on which no signal is transmitted, thereby saving energy.

Each time unit in an SSB may be Y continuous symbols or Y partially discontinuous symbols or Y completely discontinuous symbols in time domain. In this embodiment of this application, that Y symbols included in a time unit are continuous in time domain is mainly used as an example. For example, Y may be equal to 4. In other words, each time unit in an SSB includes four symbols. For one of the at least one SSB, the PSS occupies 4*N symbols, the SSS occupies 4*M symbols, and the BCH occupies 4*X symbols. For example, a time unit of an SSB may be located in a symbol 2, a symbol 3, a symbol 4, and a symbol 5 in one slot; a symbol 8, a symbol 9, a symbol 10, and a symbol 11 in one slot; or a symbol 4, a symbol 5, a symbol 6, and a symbol 7 in one slot. In the conventional technology, one SSB occupies four symbols (refer to FIG. 1). Therefore, Y=4. In this case, four symbols are used as one time unit, helping implement compatibility with an existing system. For example, in a same communication system, a network device may send an SSB in the conventional technology, or may send the SSB provided in this embodiment of this application, to implement broadband and narrowband integration.

A value of Y may be determined by the network device or specified in a protocol.

In this embodiment of this application, numbers of (N+M+X) time units, or sequence numbers (or referred to as indexes (index)) of (N+M+X) time units may be (0, 1, ..., N+M+X-1). For example, one SSB corresponds to N+M+X=4, and the four time units are respectively referred to as a time unit 0, a time unit 1, a time unit 2, and a time unit 3 in sequence in time domain. In addition, it should be noted that, in this specification, all time-domain units such as symbols, slots, or time units are numbered from 0. For example, the first symbol is denoted as a symbol 0, or the first time unit is denoted as a time unit 0. However, during actual application, numbering may also start from 1. For example, the first symbol is denoted as a symbol 1, or the first time unit is denoted as a time unit 1. In this specification, numbering starts from 0 is merely used as an example for description. The technical solutions in this embodiment of this application may also cover a manner of numbering starting from 1 or starting from another value. For example, the (N+M+X) time units may be numbered from any value. However, the time unit 0 indicates an earliest time unit or a start time unit in time domain in the (N+M+X) time units. Numbers of subsequent time units other than the time unit 0 in the (N+M+X) time units increase in ascending order in time domain.

In an optional implementation, the (N+M+X) time units are not continuous (or discontinuous) in time domain.

In a possible implementation, the "discontinuous" means that any two of the (N+M+X) time units are discontinuous in time domain. In another possible implementation, the "discontinuous" means that at least two time units with numbers (or indexes) adjacent to each other in the (N+M+X) time units are discontinuous in time domain. In still another possible implementation, the "discontinuous" may mean that Y symbols included in at least one time unit in the (N+M+X) time units are discontinuous in time domain.

For example, one SSB includes four time units, and the four time units are a time unit 0, a time unit 1, a time unit 2, and a time unit 3 in sequence in time domain. The time unit 0 and the time unit 1 are discontinuous in time domain, the time unit 1 and the time unit 2 are discontinuous in time domain, and the time unit 2 and the time unit 3 are discontinuous in time domain. Alternatively, the time unit 0 and the time unit 1 are discontinuous in time domain, the time unit 1 and the time unit 2 are continuous in time domain, and the time unit 2 and the time unit 3 are continuous in time domain. In this manner, the (N+M+X) time units are discontinuous in time domain, so that gaps (that is, discontinuous time domain positions) of the (N+M+X) time units in time domain can further be used to carry another signal, thereby facilitating compatibility with the existing system. For a low-latency service such as URLLC, random transmission is required. If one SSB occupies a plurality of continuous symbols in time domain, a latency of the URLLC is affected. Therefore, the (N+M+X) time units are discontinuous in time domain, so that impact on timely transmission of the URLLC service can be reduced.

FIG. 6A is a schematic diagram of an SSB, where an example in which X is equal to N and N is greater than M is used for the SSB. In the SSB, the PSS occupies four time units, the SSS occupies two time units, and the PBCH occupies four time units. For example, the PSS is located in a symbol 2, a symbol 3, a symbol 4, a symbol 5, a symbol 8, a symbol 9, a symbol 10, and a symbol 11 in the first slot and the second slot; the SSS is located in a symbol 2, a symbol 3, a symbol 4, a symbol 5, a symbol 8, a symbol 9, a symbol 10, and a symbol 11 in the third slot; and the PBCH is located in a symbol 2, a symbol 3, a symbol 4, a symbol 5, a symbol 8, a symbol 9, a symbol 10, and a symbol 11 in the fourth slot.

FIG. 6B is a schematic diagram of an SSB, where an example in which X is equal to N and M is equal to 0 is used for the SSB. In the SSB, the PSS occupies two time units, and the PBCH occupies two time units. For example, the PSS is located in a symbol 2, a symbol 3, a symbol 4, a symbol 5, a symbol 8, a symbol 9, a symbol 10, and a symbol 11 in one slot; and the PBCH is located in a symbol 2, a symbol 3, a symbol 4, a symbol 5, a symbol 8, a symbol 9, a symbol 10, and a symbol 11 in a next slot.

FIG. 6C is a schematic diagram of an SSB, where an example in which X is equal to N and M is equal to 0 is used for the SSB. In the SSB, the PSS occupies two time units, and the PBCH occupies two time units. For example, the PSS is located in a symbol 2, a symbol 3, a symbol 4, a symbol 5, a symbol 8, a symbol 9, a symbol 10, and a symbol 11 in a slot n; and the PBCH is located in a symbol 2, a symbol 3, a symbol 4, a symbol 5, a symbol 8, a symbol 9, a symbol 10, and a symbol 11 in a slot (n+2), where the slot (n+2) and the slot n are separated by one slot.

FIG. 7A is a schematic diagram of an SSB, where an example in which X is greater than N and N is equal to M is used for the SSB. In the SSB, a PSS occupies one time unit, an SSS occupies one time unit, and a PBCH occupies two time units. For example, the PSS is located in a symbol 2, a symbol 3, a symbol 4, and a symbol 5 in one slot; the SSS is located in a symbol 8, a symbol 9, a symbol 10, and a symbol 11 in the same slot; and the PBCH is located in a symbol 2, a symbol 3, a symbol 4, a symbol 5, a symbol 8, a symbol 9, a symbol 10, and a symbol 11 in a next slot.

Alternatively, FIG. 7B is a schematic diagram of another SSB, where X=N=M is used as an example for the SSB. In the SSB, a PSS occupies two time units, an SSS occupies two time units, and a PBCH occupies two time units. For example, the PSS is located in a symbol 2, a symbol 3, a symbol 4, a symbol 5, a symbol 8, a symbol 9, a symbol 10, and a symbol 11 in one slot; the SSS is located in a symbol 2, a symbol 3, a symbol 4, a symbol 5, a symbol 8, a symbol 9, a symbol 10, and a symbol 11 in a next slot; and the PBCH is located in a symbol 2, a symbol 3, a symbol 4, a symbol 5, a symbol 8, a symbol 9, a symbol 10, and a symbol 11 in a still next slot.

It can be learned from FIG. 6A, FIG. 6B, FIG. 6C, FIG. 7A, or FIG. 7B that all (N+M+X) time units included in one SSB are discontinuous in time domain. The SSB structures shown in the five figures can well be compatible with an existing NR system with a subcarrier spacing of 15 kHz or 30 kHz, to implement broadband and narrowband integration and reduce impact on a latency of URLLC.

In another optional implementation, a time unit 2*i and a time unit 2*i+1 in the (N+M+X) time units are continuous in time domain, and the time unit 2*i+1 and a time unit 2*(i+1) are discontinuous in time domain, where i is any one of

$$0, 1, ..., \text{and} \left\lfloor \frac{N+M+X}{2} \right\rfloor$$

, and $\lfloor \ \rfloor$ indicates rounding down. For example, one SSB includes four time units: a time unit 0, a time unit 1, a time unit 2, and a time unit 3. According to this rule, it may be determined that the time unit 0 and the time unit 1 are continuous (continuous, or may be considered as adjacent in time domain. In the embodiments of this application, adjacent in time domain and continuous in time domain may be considered as a same concept), and the time unit 2 and the time unit 3 are continuous in time domain. However, the time unit 1 and the time unit 2 are discontinuous in time domain. In other words, according to this rule, in the (N+M+X) time units included in one SSB, starting from the time unit 0, two time units corresponding to every two adjacent indexes are continuous in time domain. For ease of understanding, the two time units that are continuous in time domain may be considered as one group of time units. In this case, one SSB includes at least one group of time units. If a quantity of at least one group of time units is greater than 1, at least one group of time units is not continuous. In this manner, the (N+M+X) time units are partially discontinuous in time domain, so that gaps (that is, discontinuous time domain positions) of the (N+M+X) time units in time domain can further be used to carry another signal, thereby facilitating compatibility with the existing system and the existing URLLC service.

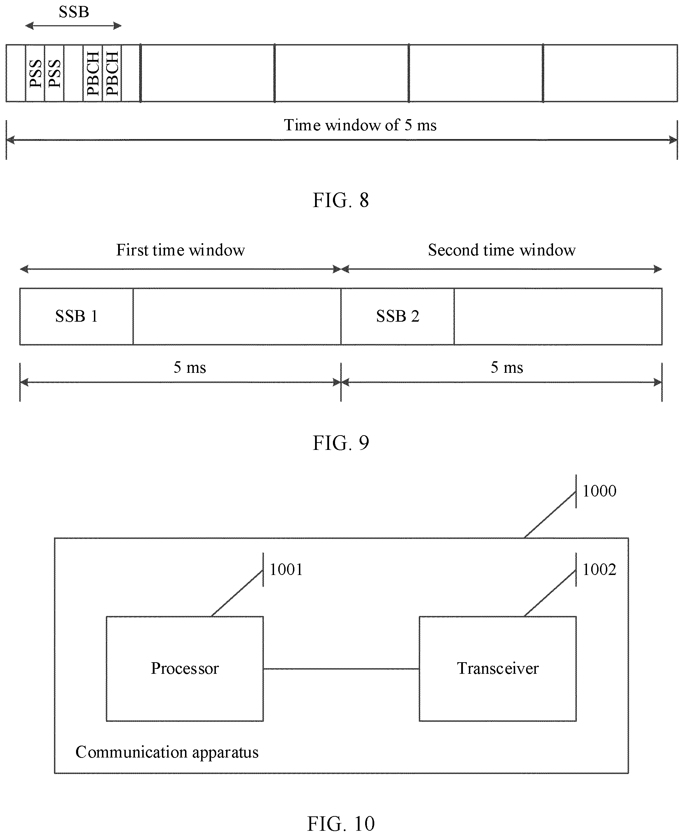

FIG. 8 is a schematic diagram of an SSB, where an example in which X is greater than N and N is equal to M is used for the SSB. In the SSB, a PSS occupies one time unit, an SSS occupies one time unit, and a PBCH occupies two time units. Specifically, the PSS is located in a symbol 4, a symbol 5, a symbol 6, and a symbol 7 in one slot; the SSS is located in a symbol 8, a symbol 9, a symbol 10, and a symbol 11 in the same slot; and the PBCH is located in a symbol 4, a symbol 5, a symbol 6, a symbol 7, a symbol 8, a symbol 9, a symbol 10, and a symbol 11 in a next slot. For example, it is considered that the SSB in FIG. 8 includes two groups of time units. Two time units occupied by the PSS and the SSS form one group of time units, and two time units occupied by the PBCH form another group of time units. It can be learned from FIG. 8 that the two time units included in each of the two groups of time units are continuous in time domain, but the two groups of time units are discontinuous in time domain. The SSB structure shown in FIG. 8 can well be compatible with an existing NR system with a subcarrier spacing of 30 kHz or 120 kHz, to implement broadband and narrowband integration and reduce impact on a latency of URLLC.

In addition, slots in which the PSS, the SSS, and the PBCH included in the SSB are located and symbols on which the PSS, the SSS, and the PBCH are located in the corresponding slots may be configured by a network device, or may be specified in a protocol.

In this embodiment of this application, one SSB is in duration. The duration may be considered as a time window. For example, a current SSB is in a time window of 5 ms. It can be learned from FIG. 6A to FIG. 6C, FIG. 7A and FIG. 7B, or FIG. 8 that an example in which one SSB is in a time window of 5 ms is used in this embodiment of this application. Certainly, a length of a time window in which one SSB is located is not limited in this embodiment of this application, and there may be another length in addition to 5 ms. However, the SSB in this embodiment of this application is also in the time window of 5 ms, to help to be compatible with an existing system.

In this embodiment of this application, at least one SSB (denoted as K SSBs) may be located in one or more time windows. For example, the K SSBs are respectively located in K time windows, that is, each time window includes one SSB. For another example, the K SSBs are located in a same time window. For another example, the K SSBs are equally grouped into P groups (where P is a positive integer less than K), and the P groups of SSBs are respectively located in P time windows. It is assumed that K=8, and P=4. That is, the eight SSBs are grouped into four groups, and each group includes two SSBs, where the four groups of SSBs are respectively located in four time windows. For another example, the K SSBs are unequally grouped into P groups (where P is a positive integer less than K), and the P groups of SSBs are respectively located in P time windows. It is assumed that K=5, P=2. The five SSBs are grouped into two groups, where the first group includes three SSBs, and the second group includes two SSBs; and the two groups of SSBs are respectively located in two time windows.

When there are a plurality of SSBs in a time window, the network device may configure the plurality of SSBs in the time window to use a same beam direction or different beam directions. This is not limited in this embodiment of this application.

The time-domain structure of the SSB may include at least one of a value of N corresponding to the SSB, a value of M corresponding to the SSB, a value of X corresponding to the SSB, and symbols, slots, or time windows occupied by the (N+M+X) time units included in the SSB in time domain. For two SSBs, provided that one of the foregoing several items is different from each other, it is considered that time-domain structures of the two SSBs are different. For example, for a first SSB and a second SSB, if N, M, and X in the first SSB are all positive integers (that is, the first SSB includes a PSS, an SSS, and a PBCH); and N and X in the second SSB are positive integers, and M is 0 (that is, the second SSB includes only a PSS and a PBCH), time-domain structures of the two SSBs are different. Alternatively, (N+M+X) time units included in the first SSB are discontinuous in time domain, but a time unit 2*i and a time unit 2*i+1 in (N+M+X) time units included in the second SSB are continuous in time domain, and the time unit 2*i+1 and a time unit 2*(i+1) are discontinuous in time domain. In this case, time-domain structures of the two SSBs are different.

Optionally, the at least one SSB includes at least two SSBs with different time-domain structures. In this case, time-domain structures of some SSBs included in the at least one SSB are the same, and time-domain structures of remaining SSBs are different, or time-domain structures of all SSBs included in the at least one SSB are different. For example, the at least one SSB includes a first SSB and a second SSB, where N, M, and X in the first SSB are all positive integers (that is, the first SSB includes a PSS, an SSS, and a PBCH); and N and X in the second SSB are positive integers, and M is 0 (that is, the second SSB includes only a PSS and a PBCH). For example, the at least one SSB includes a first SSB, a second SSB, and a third SSB, where the first SSB includes a PSS, an SSS, and a PBCH, the second SSB includes only a PSS and a PBCH, and the third SSB includes only a PBCH. For example, the at least one SSB includes a first SSB, a second SSB, a third SSB, and a fourth SSB, where the first SSB and the third SSB each include a PSS, an SSS, and a PBCH, and the second SSB and the fourth SSB each include only a PSS and a PBCH. A time-domain structure of each of the at least one SSB or content thereof may be configured by the network device, or specified in a protocol.

Optionally, the at least one SSB may be located in a plurality of time windows, and time-domain structures of SSBs located in different time windows may be the same or may be different. For example, refer to FIG. 9, two SSBs are included, and the two SSBs are two SSBs in the at least one SSB. For example, in FIG. 9, an SSB 1 located in a first time window includes a PSS, an SSS, and a PBCH, that is, N, M, and X are all positive integers; and an SSB 2 located in a second time window includes only a PSS and a PBCH, and does not include an SSS, that is, N and X are positive integers, and M is 0. It is clear that time-domain structures of the two SSBs are different. For example, a time-domain structure of the SSB 1 located in the first time window in FIG. 9 is shown in FIG. 7B, and a time-domain structure of the SSB 2 located in the second time window is shown in FIG. 6B or FIG. 6C. It is clear that the time-domain structures of the two SSBs are different.

For the SSB, each SSB has a time-domain structure. Time-domain structures of different SSBs in the at least one SSB may be the same or may be different. A time-domain structure of the at least one SSB may be considered as a whole, for example, referred to as an SSB time-domain structure, an SSB structure, or an SSB pattern (pattern). A name of the SSB time-domain structure is not limited in this embodiment of this application. The SSB time-domain structure may indicate a time-domain structure of each of the at least one SSB. For example, if time-domain structures of all SSBs in the at least one SSB are the same, the SSB time-domain structure includes only a time-domain structure of one SSB, and the time-domain structure of the SSB is the time-domain structure of each SSB in the at least one SSB. Alternatively, if time-domain structures of different SSBs in the at least one SSB are different, the SSB time-domain structure may include time-domain structures of a plurality of SSBs, and the time-domain structures of the plurality of SSBs may indicate a time-domain structure of each SSB in the at least one SSB. In this case, if the time-domain structures of the at least one SSB are different, a quantity of time-domain structures of SSBs included in the SSB time-domain structure is the same as a quantity of at least one SSB. The SSB and the time-domain structure of the SSB included in the SSB time-domain structure are in a one-to-one correspondence. Alternatively, if time-domain structures of some SSBs in the at least one SSB are the same, and time-domain structures of other SSBs are different, a quantity of time-domain structures of the SSBs included in the SSB time-domain structure may be less than a quantity of at least one SSB. It may be understood that only one time-domain structure of a same type is included in the SSB time-domain structure. This helps simplify the SSB time-domain structure.

S52. The network device sends the at least one SSB, and the terminal device receives the at least one SSB from the network device.

It should be noted that the at least one SSB received by the terminal device is a part or all of the at least one SSB sent by the network device. In other words, a quantity of SSBs received by the terminal device may be less than or equal to a quantity of SSBs sent by the network device. Because the network device is oriented to a plurality of terminal devices in a cell, the network device may send different SSBs to different terminal devices by using different beam directions or different time-domain and/or frequency-domain densities. For example, if a terminal device receives an SSB in only one beam direction, the SSB received by the terminal device is a part of the SSBs sent by the network device.

As described in S51, at least one SSB has an SSB time-domain structure, and the terminal device needs to obtain the SSB time-domain structure, so that the terminal device can detect the at least one SSB. In addition, if the terminal device performs initial access, the terminal device does not learn of a position of the SSB. Therefore, the terminal device performs blind detection on the SSB. Alternatively, a terminal device in a connected state usually learns of a position of the SSB. Therefore, the terminal device may directly perform detection, that is, directly receive the SSB. Therefore, in this embodiment of this application, "receiving" by the terminal device and "detection" by the terminal device may be considered as a same process. In other words, "receiving" is also "detection". In this case, there may be two results of detecting the SSB by the terminal device:

1. The SSB is detected (that is, the SSB is received); or
2. No SSB is detected (that is, no SSB is received).

There is an "or" relationship between the two results.

In this embodiment of this application, before or when the terminal device receives the at least one SSB, the terminal device needs to obtain the SSB time-frequency structure, including but not limited to the following three manners:

In a first manner, the SSB time-domain structure is predefined in a standard, and the SSB time-domain structure is preconfigured in the terminal device. In other words, the terminal device pre-stores the SSB time-frequency structure. In this case, that the terminal device determines the SSB time-frequency structure is specifically: The terminal device obtains the SSB time-domain structure preconfigured or stored in the terminal device.

In a second manner, the terminal device receives first signaling, where the first signaling indicates the SSB time-frequency structure, the first signaling is sent by, for example, the network device, and the terminal device may determine the SSB time-domain structure based on the first signaling. For example, the first signaling indicates values of N, M, and/or X. For example, the first signaling indicates positions of the (N+M+X) time units in time domain. For example, the first signaling indicates one or more of the at least one SSB time-domain structure introduced in this embodiment of this application. The first signaling is, for example, higher layer signaling, for example, radio resource control (radio resource control, RRC) signaling or a media access control control element (media access control control element, MAC CE). Alternatively, the first signaling is, for example, physical layer signaling, for example, downlink control information (downlink control information, DCI). An implementation of the first signaling is not limited.

In a third manner, the terminal device may directly obtain the SSB time-domain structure based on a narrowband capability. For example, one terminal device may be connected to a system based on a broadband capability, or may be connected to a system based on a narrowband capability. If the terminal device is in a deep coverage or super-distance coverage scenario, the terminal device may choose to obtain the SSB time-domain structure based on the narrowband capability, to improve efficiency of accessing the system by the terminal device. For example, it is considered that a terminal device whose supported bandwidth is greater than or equal to 5 MHz is a broadband terminal device. In this case, a bandwidth supported by the terminal device is greater than or equal to 5 MHz, and the terminal device may obtain the SSB time-domain structure based on the narrowband capability.

Optionally, a bandwidth occupied by the at least one SSB received by the terminal device in frequency domain is fewer than 20 RBs (resource block), or is fewer than or equal to 12 RBs. One RB occupies Q subcarriers in frequency domain, and Q may be a positive integer. For example, Q=12. Therefore, the narrowband terminal device (with a maximum bandwidth capability of fewer than or equal to 12/20 RBs) can normally receive the at least one SSB. In addition, according to the SSB time-domain structure provided in this embodiment of this application, requirements of super-distance coverage and deep coverage can be met.

S53. The terminal device performs synchronization and/or obtains a system message based on the received at least one SSB.

Specifically, the terminal device may synchronize with the network device based on the at least one SSB, obtain the system message based on the at least one SSB, or synchronize with the network device and obtain the system message based on the at least one SSB.

For example, when the SSB includes the PSS, the SSS, and the PBCH, the terminal device may first detect the PSS, then detect the SSS, to obtain time-frequency synchronization and/or an identity (ID) of a physical cell, and finally detect the PBCH, to obtain the system message. Subsequently, the terminal device may transmit data with the network device based on the time-frequency synchronization and the system message.

Optionally, master information blocks (master information block, MIB) carried on PBCHs within 160 ms are the same. In comparison with an existing NR system in which MIBs are the same in an interval of 80 ms (eight subframes), in the new SSB provided in this embodiment of this application, a quantity of repetitions of the PBCH is greater, and the terminal device may perform combined detection based on more PBCHs, to enhance receiving performance of the terminal device. This is applicable to a narrowband terminal device and a coverage enhancement scenario.

As described above, there may be a plurality of services, a plurality of scenarios, and terminal devices with a plurality of bandwidth capabilities in the system. Therefore, a URLLC service, an eMBB service, and an mMTC service may exist on one carrier, and one carrier may be used by a narrowband terminal device and a broadband terminal device to transmit data. The SSB provided in this embodiment of this application provides convenience for multiplexing of a plurality of services, or for broadband and narrowband integration.

The following describes, with reference to the accompanying drawings, apparatuses configured to implement the foregoing method in the embodiments of this application. Therefore, all the foregoing content may be used in subsequent embodiments, and repeated content is not described again.

FIG. 10 is a schematic structural diagram of a communication apparatus 1000. The communication apparatus 1000 may implement a function of the terminal device described above. The communication apparatus 1000 may be the terminal device described above, or may be a chip disposed in the terminal device described above. The communication apparatus 1000 may include a processor 1001 and a transceiver 1002. The processor 1001 may be configured to: perform S53 in the embodiment shown in FIG. 5, and/or support another process of the technology described in this specification, for example, may perform all or some of the processes performed by the terminal device other than the receiving and sending processes described above. The transceiver 1002 may be configured to: perform S52 in the embodiment shown in FIG. 5, and/or support another process of the technology described in this specification, for example, may perform all or some of the foregoing receiving and sending processes performed by the terminal device.

For example, the transceiver 1002 is configured to receive at least one SSB, where one of the at least one SSB includes at least one of a PSS, an SSS, or a PBCH, the SSB occupies (N+M+X) time units, and a time-domain structure of the SSB is as follows: in the SSB, the PSS occupies N time units, the SSS occupies M time units, and the PBCH occupies X time units, where each time unit includes Y symbols, N is an integer greater than or equal to 0, M is an integer greater than or equal to 0, X is an integer greater than or equal to 0, N, X, and M are not all 0, and Y is an integer greater than 1.

The processor 1001 is configured to perform synchronization and/or obtain a system message based on the received at least one SSB.

In a possible implementation, Y=4.

In a possible implementation, the (N+M+X) time units are discontinuous in time domain.

In a possible implementation, a time unit 2*i and a time unit 2*i+1 in the (N+M+X) time units are continuous in time domain, and the time unit 2*i+1 and a time unit 2*(i+1) are discontinuous in time domain, where i is any one of 0, 1, ..., and $\left\lfloor \dfrac{N+M+X}{2} \right\rfloor$.

In a possible implementation, the at least one SSB is located in at least one time window, and SSBs located in different time windows have different time-domain structures.

In a possible implementation, X is greater than or equal to N.

In a possible implementation, N is greater than or equal to M.

In a possible implementation,

the transceiver 1002 is further configured to: before receiving the at least one SSB, receive first signaling, where the first signaling is used to indicate an SSB time-domain structure; and
the transceiver 1002 is configured to receive the at least one SSB in the following manner: receive the at least one SSB based on the SSB time-domain structure.

All related content of the steps in the foregoing method embodiments may be cited in function descriptions of corresponding functional modules. Details are not described herein again.

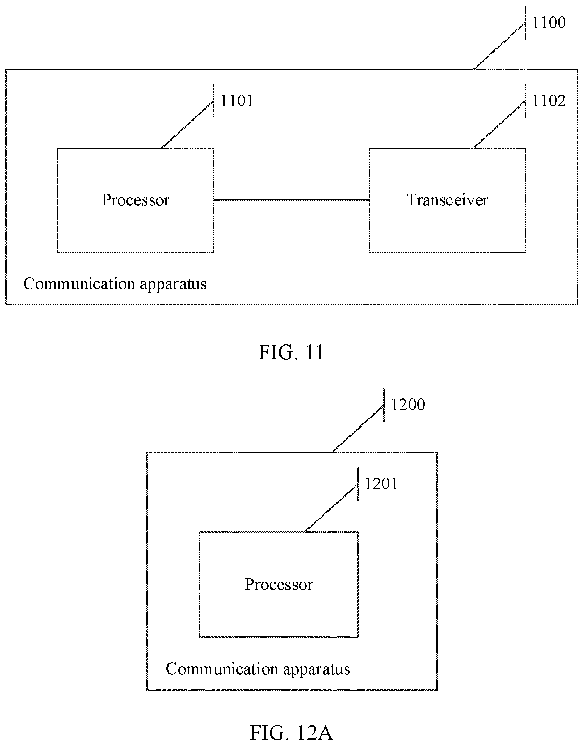

FIG. 11 is a schematic structural diagram of a communication apparatus 1100. The communication apparatus 1100 may implement a function of the network device described above. The communication apparatus 1100 may be the network device described above, or may be a chip disposed in the network device described above. The communication apparatus 1100 may include a processor 1101 and a transceiver 1102. The processor 1101 may be configured to: perform S51 in the embodiment shown in FIG. 5, and/or support another process of the technology described in this specification, for example, may perform all or some of the processes performed by the terminal device other than the receiving and sending processes described above. The transceiver 1102 may be configured to: perform S52 in the embodiment shown in FIG. 5, and/or support another process of the technology described in this specification, for example, may perform all or some of the foregoing receiving and sending processes performed by the terminal device.

For example, the processor 1101 is configured to generate at least one SSB, where one of the at least one SSB includes at least one of a PSS, an SSS, or a PBCH, the SSB occupies (N+M+X) time units, and a time-domain structure of the SSB is as follows: in the SSB, the PSS occupies N time units, the SSS occupies M time units, and the PBCH occupies X time units, where each time unit includes Y symbols, N is an integer greater than or equal to 0, M is an integer greater than or equal to 0, X is an integer greater than or equal to 0, N, X, and M are not all 0, and Y is an integer greater than 1.

The transceiver 1102 is configured to send the at least one SSB.

In a possible implementation, Y=4.

In a possible implementation, the (N+M+X) time units are discontinuous in time domain.

In a possible implementation, a time unit 2*i and a time unit 2*i+1 in the (N+M+X) time units are continuous in time domain, and the time unit 2*i+1 and a time unit 2*(i+1) are discontinuous in time domain, where i is any one of 0, 1, ..., and $\left\lfloor \dfrac{N+M+X}{2} \right\rfloor$.

In a possible implementation, the at least one SSB is located in at least one time window, and SSBs located in different time windows have different time-domain structures.

In a possible implementation, X is greater than or equal to N.

In a possible implementation, N is greater than or equal to M.

In a possible implementation, the transceiver 1102 is further configured to send first signaling, where the first signaling is used to indicate an SSB time-domain structure, and the SSB time-domain structure is used to receive the at least one SSB.

All related content of the steps in the foregoing method embodiments may be cited in function descriptions of corresponding functional modules. Details are not described herein again.

In a simple embodiment, a person skilled in the art may figure out that the communication apparatus 1000 or the communication apparatus 1100 may alternatively be implemented by using a structure of a communication apparatus 1200 shown in FIG. 12A. The communication apparatus 1200 may implement a function of the terminal device or the network device described above. The communication apparatus 1200 may include a processor 1201.

When the communication apparatus 1200 is configured to implement a function of the terminal device described above, the processor 1201 may be configured to: perform S53 in the embodiment shown in FIG. 5, and/or support another process of the technology described in this specification, for example, may perform all or some of the processes performed by the terminal device other than the receiving and sending processes described above. Alternatively, when the communication apparatus 1200 is configured to implement a function of the network device described above, the processor 1201 may be configured to: perform S51 in the embodiment shown in FIG. 5, and/or support another process of the technology described in this specification, for example, may perform all or some of the processes performed by the network device other than the receiving and sending processes described above.

The communication apparatus 1200 may be implemented by using a field-programmable gate array (field-programmable gate array, FPGA), an application-specific integrated circuit (application specific integrated circuit, ASIC), a system on chip (system on chip, SoC), a central processing unit (central processor unit, CPU), a network processor (network processor, NP), a digital signal processing circuit (digital signal processor, DSP), a micro controller unit (micro controller unit, MCU), a programmable controller (programmable logic device, PLD), or another integrated chip. The communication apparatus 1200 may be disposed in the terminal device or the network device in the embodiments of this application, so that the terminal device or the network device implements the method provided in the embodiments of this application.

In an optional implementation, the communication apparatus 1200 may include a transceiver component, configured to communicate with another device. When the communication apparatus 1200 is configured to implement a function of the terminal device or the network device described above, the transceiver component may be configured to: perform S52 in the embodiment shown in FIG. 5, and/or support another process of the technology described in this specification. For example, the transceiver component is a communication interface. If the communication apparatus 1200 is a terminal device or a network device, the communication interface may be a transceiver in the terminal device or the network device, for example, the transceiver 1102 or the transceiver 1202. The transceiver is, for example, a radio frequency transceiver component in the terminal device or the network device. Alternatively, if the communication apparatus 1200 is a chip disposed in the terminal device or the network device, the communication interface may be an input/output interface of the chip, for example, an input/output pin.

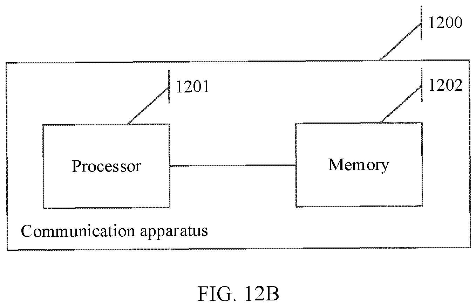

In an optional implementation, referring to FIG. 12B, the communication apparatus 1200 may further include a memory 1202. The memory 1202 is configured to store computer programs or instructions, and the processor 1201 is configured to decode and execute the computer programs or the instructions. It should be understood that the computer programs or instructions may include functional programs of the terminal device or the network device. When the functional programs of the terminal device are decoded and executed by the processor 1201, the terminal device can be enabled to implement the function of the terminal device in the method provided in the embodiment shown in FIG. 5 in the embodiments of this application. When the functional programs of the network device are decoded and executed by the processor 1201, the network device can be enabled to implement the function of the network device in the method provided in the embodiment shown in FIG. 5 in the embodiments of this application.

In another optional implementation, the functional programs of the terminal device or the network device are stored in an external memory of the communication apparatus 1200. When the functional programs of the terminal device are decoded and executed by the processor 1201, the memory 1202 temporarily stores some or all content of the functional programs of the terminal device. When the functional programs of the network device are decoded and executed by the processor 1201, the memory 1202 temporarily stores some or all content of the functional programs of the network device.

In another optional implementation, the functional programs of the terminal device or the network device are set to be stored in the memory 1202 in the communication apparatus 1200. When the memory 1202 in the communication apparatus 1200 stores the functional programs of the terminal device, the communication apparatus 1200 may be disposed in the terminal device in the embodiments of this application. When the memory 1202 in the communication apparatus 1200 stores the functional programs of the network device, the communication apparatus 1200 may be disposed in the network device in the embodiments of this application.

In still another optional implementation, some content of the functional programs of the terminal device is stored in an external memory of the communication apparatus 1200, and the other content of the functional programs of the terminal device is stored in the memory 1202 in the communication apparatus 1200. Alternatively, some content of the functional programs of the network device is stored in an external memory of the communication apparatus 1200, and the other content of the functional programs of the network device is stored in the memory 1202 in the communication apparatus 1200.

In the embodiments of this application, the communication apparatus 1000, the communication apparatus 1100, and the communication apparatus 1200 are presented in a form in which functional modules are obtained through division based on corresponding functions, or may be presented in a form in which functional modules are obtained through division in an integrated manner. The "module" herein may be an ASIC, a processor and a memory that execute one or more software or firmware programs, an integrated logic circuit, and/or another component that can provide the foregoing functions.

In addition, the communication apparatus 1000 provided in the embodiment shown in FIG. 10 may alternatively be implemented in another form. For example, the communication apparatus includes a processing module and a transceiver module. For example, the processing module may be implemented by the processor 1001, and the transceiver module may be implemented by the transceiver 1002. The processing module may be configured to: perform S53 in the embodiment shown in FIG. 5, and/or support another process of the technology described in this specification, for example, may perform all or some of the processes performed by the terminal device other than the receiving and sending processes described above. The transceiver module may be configured to: perform S52 in the embodiment shown in FIG. 5, and/or support another process of the technology described in this specification, for example, may perform all or some of the foregoing receiving and sending processes performed by the terminal device.

For example, the transceiver module is configured to receive at least one SSB, where one of the at least one SSB includes at least one of a PSS, an SSS, or a PBCH, the SSB occupies (N+M+X) time units, and a time-domain structure of the SSB is as follows: in the SSB, the PSS occupies N time units, the SSS occupies M time units, and the PBCH occupies X time units, where each time unit includes Y symbols, N is an integer greater than or equal to 0, M is an integer greater than or equal to 0, X is an integer greater than or equal to 0, N, X, and M are not all 0, and Y is an integer greater than 1.

The processing module is configured to perform synchronization and/or obtain a system message based on the received at least one SSB.

In a possible implementation, Y=4.

In a possible implementation, the (N+M+X) time units are discontinuous in time domain.

In a possible implementation, a time unit 2*i and a time unit 2*i+1 in the (N+M+X) time units are continuous in time domain, and the time unit 2*i+1 and a time unit 2*(i+1) are discontinuous in time domain, where i is any one of 0, 1, ..., and $\left\lfloor \dfrac{N+M+X}{2} \right\rfloor$.

In a possible implementation, the at least one SSB is located in at least one time window, and SSBs located in different time windows have different time-domain structures.

In a possible implementation, X is greater than or equal to N.

In a possible implementation, N is greater than or equal to M.

In a possible implementation,

the transceiver module is further configured to: before receiving the at least one SSB, receive first signaling, where the first signaling is used to indicate an SSB time-domain structure; and
the transceiver module is configured to receive the at least one SSB in the following manner: receive the at least one SSB based on the SSB time-domain structure.

All related content of the steps in the foregoing method embodiments may be cited in function descriptions of corresponding functional modules. Details are not described herein again.

The communication apparatus 1100 provided in the embodiment shown in FIG. 11 may alternatively be implemented in another form. For example, the communication apparatus includes a processing module and a transceiver module. For example, the processing module may be implemented by the processor 1101, and the transceiver module may be implemented by the transceiver 1102. The processing module may be configured to: perform S51 in the embodiment shown in FIG. 5, and/or support another process of the technology described in this specification, for example, may perform all or some of the processes performed by the network device other than the receiving and sending processes described above. The transceiver module may be configured to: perform S52 in the embodiment shown in FIG. 5, and/or support another process of the technology described in this specification, for example, may perform all or some of the foregoing receiving and sending processes performed by the network device.

For example, the processing module is configured to generate at least one SSB, where one of the at least one SSB includes at least one of a PSS, an SSS, or a PBCH, the SSB occupies (N+M+X) time units, and a time-domain structure of the SSB is as follows: in the SSB, the PSS occupies N time units, the SSS occupies M time units, and the PBCH occupies X time units, where each time unit includes Y symbols, N is an integer greater than or equal to 0, M is an integer greater than or equal to 0, X is an integer greater than or equal to 0, N, X, and M are not all 0, and Y is an integer greater than 1.

The transceiver module is configured to send the at least one SSB.

In a possible implementation, Y=4.

In a possible implementation, the (N+M+X) time units are discontinuous in time domain.

In a possible implementation, a time unit 2*i and a time unit 2*i+1 in the (N+M+X) time units are continuous in time domain, and the time unit 2*i+1 and a time unit 2*(i+1) are discontinuous in time domain, where i is any one of 0, 1, ..., and $\left\lfloor \dfrac{N+M+X}{2} \right\rfloor$.

In a possible implementation, the at least one SSB is located in at least one time window, and SSBs located in different time windows have different time-domain structures.

In a possible implementation, X is greater than or equal to N.

In a possible implementation, N is greater than or equal to M.

In a possible implementation, the transceiver module is further configured to send first signaling, where the first signaling is used to indicate an SSB time-domain structure, and the SSB time-domain structure is used to receive the at least one SSB.

All related content of the steps in the foregoing method embodiments may be cited in function descriptions of corresponding functional modules. Details are not described herein again.

The communication apparatus 1000, the communication apparatus 1100, and the communication apparatus 1200 provided in the embodiments of this application may be configured to perform the method provided in the embodiment shown in FIG. 5. Therefore, for technical effects that can be achieved by the communication apparatus 1000, the communication apparatus 1100, and the communication apparatus 1200, refer to the foregoing method embodiments. Details are not described herein again.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid state disk, SSD)), or the like.

It is clear that a person skilled in the art can make various modifications and variations to the embodiments of this application without departing from the spirit and scope of this application. This application is intended to cover these modifications and variations provided that they fall within the scope of protection defined by the following claims and their equivalent technologies.

**Claims**

1. A communication method, comprising:

    receiving, by a terminal device, at least one SSB, wherein one of the at least one SSB comprises at least one of a PSS, an SSS, or a PBCH, the SSB occupies (N+M+X) time units, and a time-domain structure of the SSB is as follows: in the SSB, the PSS occupies N time units, the SSS occupies M time units, and the PBCH occupies X time units, wherein each time unit comprises Y symbols, N is an integer greater than or equal to 0, M is an integer greater than or equal to 0, X is an integer greater than or equal to 0, N, X, and M are not all 0, and Y is an integer greater than 1; and

performing, by the terminal device, synchronization and/or obtaining a system message based on the received at least one SSB.

2. The method according to claim 1, wherein Y=4.

3. The method according to claim 1 or 2, wherein the (N+M+X) time units are discontinuous in time domain.

4. The method according to claim 1 or 2, wherein a time unit 2*i and a time unit 2*i+1 in the (N+M+X) time units are continuous in time domain, and the time unit 2*i+1 and a time unit 2*(i+1) are discontinuous in time domain, wherein i is any one of 0, 1, ..., and $\left\lfloor \dfrac{N+M+X}{2} \right\rfloor$.

5. The method according to any one of claims 1 to 4, wherein the at least one SSB is located in at least one time window, and SSBs located in different time windows have different time-domain structures.

6. The method according to any one of claims 1 to 5, wherein X is greater than or equal to N.

7. The method according to any one of claims 1 to 6, wherein N is greater than or equal to M.

8. The method according to any one of claims 1 to 7, wherein

before the receiving, by a terminal device, at least one SSB, the method further comprises: receiving, by the terminal device, first signaling, wherein the first signaling is used to indicate an SSB time-domain structure; and the receiving, by a terminal device, at least one SSB comprises: receiving, by the terminal device, the at least one SSB based on the SSB time-domain structure.

9. A communication method, comprising:

generating, by a network device, at least one SSB, wherein one of the at least one SSB comprises at least one of a PSS, an SSS, or a PBCH, the SSB occupies (N+M+X) time units, and a time-domain structure of the SSB is as follows: in the SSB, the PSS occupies N time units, the SSS occupies M time units, and the PBCH occupies X time units, wherein each time unit comprises Y symbols, N is an integer greater than or equal to 0, M is an integer greater than or equal to 0, X is an integer greater than or equal to 0, N, X, and M are not all 0, and Y is an integer greater than 1; and sending, by the network device, the at least one SSB.

10. The method according to claim 9, wherein Y=4.

11. The method according to claim 9 or 10, wherein the (N+M+X) time units are discontinuous in time domain.

12. The method according to claim 9 or 10, wherein a time unit 2*i and a time unit 2*i+1 in the (N+M+X) time units are continuous in time domain, and the time unit 2*i+1 and a time unit 2*(i+1) are discontinuous in time domain, wherein i is any one of 0, 1, ..., and $\left\lfloor \dfrac{N+M+X}{2} \right\rfloor$.

13. The method according to any one of claims 9 to 12, wherein the at least one SSB is located in at least one time window, and SSBs located in different time windows have different time-domain structures.

14. The method according to any one of claims 9 to 13, wherein X is greater than or equal to N.

15. The method according to any one of claims 9 to 14, wherein N is greater than or equal to M.

**16.** The method according to any one of claims 9 to 15, wherein the method further comprises:
sending, by the network device, first signaling, wherein the first signaling is used to indicate an SSB time-domain structure, and the SSB time-domain structure is used to receive the at least one SSB.

**17.** A communication apparatus, comprising:

a transceiver, configured to receive at least one SSB, wherein one of the at least one SSB comprises at least one of a PSS, an SSS, or a PBCH, the SSB occupies (N+M+X) time units, and a time-domain structure of the SSB is as follows: in the SSB, the PSS occupies N time units, the SSS occupies M time units, and the PBCH occupies X time units, wherein each time unit comprises Y symbols, N is an integer greater than or equal to 0, M is an integer greater than or equal to 0, X is an integer greater than or equal to 0, N, X, and M are not all 0, and Y is an integer greater than 1; and
a processor, configured to perform synchronization and/or obtain a system message based on the received at least one SSB.

**18.** The communication apparatus according to claim 17, wherein Y=4.

**19.** The communication apparatus according to claim 17 or 18, wherein the (N+M+X) time units are discontinuous in time domain.

**20.** The communication apparatus according to claim 17 or 18, wherein a time unit 2*i and a time unit 2*i+1 in the (N+M+X) time units are continuous in time domain, and the time unit 2*i+1 and a time unit 2*(i+1) are discontinuous in time domain, wherein i is any one of 0, 1, ..., and $\left\lfloor \dfrac{N+M+X}{2} \right\rfloor$.

**21.** The communication apparatus according to any one of claims 17 to 20, wherein the at least one SSB is located in at least one time window, and SSBs located in different time windows have different time-domain structures.

**22.** The communication apparatus according to any one of claims 17 to 21, wherein X is greater than or equal to N.

**23.** The communication apparatus according to any one of claims 17 to 22, wherein N is greater than or equal to M.

**24.** The communication apparatus according to any one of claims 17 to 23, wherein

the transceiver is further configured to: before receiving the at least one SSB, receive first signaling, wherein the first signaling is used to indicate an SSB time-domain structure; and
the transceiver is configured to receive the at least one SSB in the following manner: receive the at least one SSB based on the SSB time-domain structure.

**25.** A communication apparatus, comprising:

a processor, configured to generate at least one SSB, wherein one of the at least one SSB comprises at least one of a PSS, an SSS, or a PBCH, the SSB occupies (N+M+X) time units, and a time-domain structure of the SSB is as follows: in the SSB, the PSS occupies N time units, the SSS occupies M time units, and the PBCH occupies X time units, wherein each time unit comprises Y symbols, N is an integer greater than or equal to 0, M is an integer greater than or equal to 0, X is an integer greater than or equal to 0, N, X, and M are not all 0, and Y is an integer greater than 1; and
a transceiver, configured to send the at least one SSB.

**26.** The communication apparatus according to claim 25, wherein Y=4.

**27.** The communication apparatus according to claim 25 or 26, wherein the (N+M+X) time units are discontinuous in time domain.

**28.** The communication apparatus according to claim 25 or 26, wherein a time unit 2*i and a time unit 2*i+1 in the (N+M+X) time units are continuous in time domain, and the time unit 2*i+1 and a time unit 2*(i+1) are discontinuous in time domain, wherein i is any one of 0, 1, ..., and $\left\lfloor \dfrac{N+M+X}{2} \right\rfloor$.

29. The communication apparatus according to any one of claims 25 to 28, wherein the at least one SSB is located in at least one time window, and SSBs located in different time windows have different time-domain structures.

30. The communication apparatus according to any one of claims 25 to 29, wherein X is greater than or equal to N.

31. The communication apparatus according to any one of claims 25 to 30, wherein N is greater than or equal to M.

32. The communication apparatus according to any one of claims 25 to 31, wherein the transceiver is further configured to send first signaling, wherein the first signaling is used to indicate an SSB time-domain structure, and the SSB time-domain structure is used to receive the at least one SSB.

33. A computer-readable storage medium, wherein the computer-readable storage medium stores a computer program, the computer program comprises program instructions; and when the program instructions are executed by a computer, the computer is enabled to perform the method according to any one of claims 1 to 8.

34. A computer-readable storage medium, wherein the computer-readable storage medium stores a computer program, the computer program comprises program instructions; and when the program instructions are executed by a computer, the computer is enabled to perform the method according to any one of claims 9 to 16.

FIG. 1

One synchronization signal burst set

5 ms

SSB #0 SSB #1 SSB #L ... SSB #0 SSB #1 SSB #L ...

PSS PBCH PBCH SSS PBCH PBCH

Synchronization signal burst set periodicity (20 ms)

SSB #3
SSB #2
SSB #1

FIG. 2

EP 3 905 799 A1

28

Network
device

Terminal
device 1

FIG.3

Network device

Terminal device

FIG. 4

```
┌─────────────┐                              ┌─────────────┐
│  Terminal   │                              │   Network   │
│   device    │                              │   device    │
└─────────────┘                              └─────────────┘
       │                                            │
       │                           ┌────────────────┴──────────────┐
       │                           │  S51. Generate at least one SSB, │
       │                           │  where one of the at least one SSB│
       │                           │  includes at least one of a PSS, an│
       │                           │  SSS, or a PBCH, the SSB          │
       │                           │  occupies (N+M+X) time units,     │
       │                           │  and a time-domain structure of   │
       │                           │  the SSB is as follows: in the    │
       │                           │  SSB, the PSS occupies N time     │
       │                           │  units, the SSS occupies M time   │
       │                           │  units, and the PBCH occupies X   │
       │                           │  time units, where each time unit │
       │                           │  includes Y symbols               │
       │                           └────────────────┬──────────────┘
       │          S52. At least one SSB             │
       │◄───────────────────────────────────────────│
┌──────┴──────────────────────────────┐             │
│ S53. Perform synchronization and/or  │             │
│ obtain a system message based on the │             │
│   received at least one SSB          │             │
└──────┬──────────────────────────────┘             │
       │                                            │
```

FIG. 5

SSB

| PSS | PSS | | PSS | PSS | | SSS | SSS | | PBCH | PBCH | | PBCH | PBCH |

Time window of 5 ms

FIG. 6A

SSB

| | PSS | | PSS | | | | PBCH | | PBCH | | | | | |

Time window of 5 ms

FIG. 6B

SSB

| | PSS | | PSS | | | | | PBCH | | PBCH | | | | |

Time window of 5 ms

FIG. 6C

SSB

| | PSS | | SSS | | | PBCH | | PBCH | | | | | |

Time window of 5 ms

FIG. 7A

SSB

| | PSS | | PSS | | | SSS | | SSS | | | PBCH | | PBCH | | | | |

Time window of 5 ms

FIG. 7B

SSB

| | | | | | | | | | | |
|PSS|PSS| |PBCH|PBCH| | | | | | |

Time window of 5 ms

FIG. 8

First time window                    Second time window

| SSB 1 | | SSB 2 | |

5 ms                                        5 ms

FIG. 9

1000

1001                                    1002

Processor ——————— Transceiver

Communication apparatus

FIG. 10

FIG. 11

FIG. 12A

1200

1201

1202

Processor

Memory

Communication apparatus

FIG. 12B

## INTERNATIONAL SEARCH REPORT

| International application No. |
|---|
| **PCT/CN2020/072081** |

**A.    CLASSIFICATION OF SUBJECT MATTER**

H04W 56/00(2009.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

VEN; CNABS; CNKI; CNTXT; EPTXT; WOTXT; USTXT: 主同步, 辅同步, 物理广播信道, 时间, PSS, SSS, PBCH, primary synchronisation signal, secondary synchronisation sinal, physical broadcast channel, time

**C.    DOCUMENTS CONSIDERED TO BE RELEVANT**

| Category* | Citation of document, with indication, where appropriate, of the relevant passages | Relevant to claim No. |
|---|---|---|
| X | WO 2018235208 A1 (NTT DOCOMO, INC.) 27 December 2018 (2018-12-27) description, paragraphs [0017]-[0201], figures 1-13 | 1-34 |
| A | CN 104955106 A (HUAWEI TECHNOLOGIES CO., LTD.) 30 September 2015 (2015-09-30) entire document | 1-34 |

☐ Further documents are listed in the continuation of Box C.          ☑ See patent family annex.

| *    Special categories of cited documents: | "T"    later document published after the international filing date or priority date and not in conflict with the application but cited to understand the principle or theory underlying the invention |
|---|---|
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **10 March 2020** | **30 March 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**EP 3 905 799 A1**

## INTERNATIONAL SEARCH REPORT
### Information on patent family members

International application No.

**PCT/CN2020/072081**

| Patent document cited in search report | | | Publication date (day/month/year) | Patent family member(s) | | | Publication date (day/month/year) |
|---|---|---|---|---|---|---|---|
| WO | 2018235208 | A1 | 27 December 2018 | CN | 110786040 | A | 11 February 2020 |
| | | | | IN | 201937051872 | A | 24 January 2020 |
| CN | 104955106 | A | 30 September 2015 | CN | 104955106 | B | 08 January 2019 |
| | | | | WO | 2015149603 | A1 | 08 October 2015 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 201910049720 X